# EUROPEAN PATENT SPECIFICATION

(11) **EP 1 830 666 B1**
(45) Date of publication and mention of the grant of the patent: **25.09.2013**
(21) Application number: 05853361.3
(22) Date of filing: 08.12.2005
(51) Int. Cl.: A23G 1/36, A23G 1/48, A23G 1/46, A23G 1/56

(54) **CHOCOLATE PRODUCTS AND INGREDIENTS AND METHODS FOR PRODUCING NOVEL OIL-IN-WATER SUSPENSIONS**
SCHOKOLADEPRODUKTE UND -BESTANDTEILE SOWIE VERFAHREN ZUR HERSTELLUNG VON NEUEN ÖL-IN-WASSER-SUSPENSIONEN
PRODUITS ET INGREDIENTS A BASE DE CHOCOLAT ET PROCEDES POUR LA PRODUCTION DE NOUVELLES SUSPENSIONS HUILE DANS EAU

(30) Priority: 08.12.2004 US 6820; 05.04.2005 US 98540
(43) Date of publication of application: 12.09.2007
(73) Proprietor: The Hershey Company, Hershey, PA 17033 (US)
(72) Inventor: HANSELMANN, William, The Hershey Company, Hershey, PA 17033 (US)
(74) Representative: ZBM Patents
(86) International application number: PCT/US2005/044418
(87) International publication number: WO 2006/063130

(56) References cited:
- EP-A1- 1 046 342
- EP-A2- 0 522 704
- US-A- 4 234 611
- US-A- 4 623 552
- GELLINGER I ET AL STARCH/STAERKE. vol. 33, no. 3, 1981, pages 76 - 79, XP008119543

## Description

### Reference To Related Applications

This application claims priority benefit of U.S. Patent Application No. 11/006,820, filed December 8, 2004, pending, and claims priority benefit of U.S. Patent Application No. 11/098,540, filed April 5, 2005, pending, which is a continuation-in-part of U.S. Patent Application No. 11/006,820, and the entire contents of each are hereby incorporated by reference.

### Field of the Invention and Introduction

The invention relates to novel methods for manipulating protein and polysaccharide/starch components of food products or ingredients, and in particular cocoa-containing products, as a food ingredient and as a final food product. In one aspect, the invention encompasses a chocolate composition comprising a gel network formed by cocoa starches and/or proteins, or milk proteins and cocoa solids, and also comprising crystallized cocoa butter as a dispersed component, and water or milk or skim milk as the continuous phase or aqueous phase of a suspension. Previously, chocolate compositions employed cocoa butter as the continuous phase in compositions and suspensions, generally with sugar, milk solids and cocoa solids as the dispersed phase. Both liquid cocoa compositions and solid compositions traditionally follow this standard. The compositions, products, and ingredients possible according to the invention, however, can utilize the gel forming potential of starch and protein components of cocoa ingredients and/or other ingredients to create a wide range of oil-in-water suspensions with advantageous properties. For example, recipes for a low or reduced calorie chocolate product or ingredient having the same cocoa content as conventional chocolate and/or falling within the standard of identity for chocolate products can be designed. In a preferred embodiment, the invention encompasses a drying step to control the water activity of a final product or composition and afford microbiological stability to the product or composition. In addition, the production and packaging options for chocolate products are expanded by the use of the invention as the viscosity of the chocolate product or ingredient can be varied easily without specific reliance on cocoa butter content.

### Description of Related Art

Chocolate products and ingredients conventionally exist as suspensions, with fat or oil as the continuous phase. Polymorphic crystals of cocoa butter form an important part of the fine structure of these suspensions and the methods to control crystallization of cocoa butter are well known. In general, the setting of cocoa butter crystals into the most stable form is desirable. The failure to account for the difference in forms within the fat suspension can result in poor color and blooming.

From a production point of view, cocoa butter content has been changed to vary the viscosity of chocolate compositions, so that higher cocoa butter content results in a more viscous final product or ingredient. While heating may be used to increase flowabilty or solubility of certain ingredients in chocolate processing or packaging, heating is not used as a method to change the properties of cocoa-containing compositions.

EP 1046324 discloses a chocolate composition containing a chocolate foodstuff, moisture, and a starchy ingredient and/or a heat-coagulating protein. The chocolate compositions are manufactured as follow: initially, the moisture is heated to 65 to 70°C, whereupon a chocolate foodstuff into which fats/oils have been melted is added by stirring in; further it is emulsified and cooled. Prior to the emulsifying step or homogenizing step, disinfecting or sterilizing may be done. As stirring methods herein, either a gentle by-hand stirring procedure, or a high-speed stirring system capable of applying strong shear forces (e.g., a stirring system in which the "Homomixer" or the like is employed) may be used. A homogenizing process may be carried out as needed.

In general, the invention addresses the shortcomings in the art of food and ingredient production that currently rely almost exclusively on fat or oil emulsions, especially in the fields of cocoa and confectionery products. The use of the oil-in-water suspensions of the invention provide more flexibility in designing new and improved products, especially stable oil-in-water suspensions for cocoa products and ingredients.

### Summary of the Invention

The present invention relates to a food product or ingredient having a crystallized and gelatinized structure in an oil-in-water suspension. The combination of a gelatinized structure, a crystallized structure, and an oil-in-water suspension made possible and demonstrated by the methods, food products and ingredients of the invention provide numerous advantages in the food processing field. For example, the invention provides products with improved viscosity characteristics over a greater range of temperatures and allows sugar free or low or reduced calorie products to be produced while maintaining other desirable characteristics, such as texture, taste, mouthfeel, and viscosity. Furthermore, the invention can be said to incorporate methods and ingredients, or more particularly moisture levels, that standard practices report as inappropriate or undesirable in the chocolate manufacturing field. For example, Beckett (Industrial Chocolate Manufacture and Use, 3d Ed., Beckett ed., 1999 Blackwell Science Ltd., see Chaps. 9 and 20 in particular) notes that it is necessary to remove moisture during processing of chocolate to avoid the requirement to use additional fat and to avoid or minimize the possibility of microbial growth. In addition, Minifie (Chocolate, Cocoa, and Confectionery, 3d Ed., 1999, Aspen Publishing, see Chap. 5 in particular) notes the importance of minimizing the introduction of water in chocolate processing in order to maintain a desired viscosity. Thus, in one aspect, by using water or water-based solutions as the aqueous phase in an oil-in-water solution for cocoa and/or chocolate food ingredients or products, the invention utilizes counterintuitive methods and ingredients as compared to typical chocolate product and ingredient manufacturing. Optionally, however, the moisture content or water activity of the final product or composition according to the invention can be manipulated to a desired level in order to reduce or eliminate microbiological growth or contamination. In addition, one of skill in the art can select a desired microstructure or characteristics for a final product by manipulating the moisture level. For example, depending on the final moisture level, a product can vary from a plastic state to a brittle, crisp product. In a preferred example, a chocolate product having a water activity (Aw) of 0.85 is typically a creamy, smooth paste, while at a Aw of 0.6 it is rather chewy, like a caramel, and at 0.3 it is crisp and brittle, like a dried chip. Typically, the control of water activity is through a drying process or a final drying process, but any known or available process can be used.

In one embodiment, the food ingredient comprises an oil or fat phase comprising at least 2% or at least 3% cocoa solids and at least 2% or at least 3% cocoa butter, the cocoa solids being in suspension and/or at least partially crystallized in the final ingredient or product at room temperature. In various embodiments involving cocoa or chocolate, the cocoa butter and cocoa solids content from one or more of a variety of added cocoa-containing products can be selected to generate a range of final weight percent values, including from 2% to 3% cocoa butter, 3% to 5% cocoa butter, 5% to 10% or higher cocoa butter, and 2% to about 3% cocoa solids, 3% to 5% cocoa solids, and 5% to 10% or higher cocoa solids, and any combination of these ranges. In one aspect, the invention does not encompass prior or conventional chocolate milk mixtures that do not possess or are not treated to generate a gelatinized and/or oil-in-water suspension as described here. Generally, prior chocolate milk mixtures do not form stable suspensions, as one of skill in the art understands.

The food ingredients or products of the invention or used in the invention are not limited to any particular state or temperature, for example room temperature. The reference to crystallized or partially crystallized structures at room temperature means the food ingredient or product is capable of exhibiting a crystallized or partially crystallized structure or microstructure when at room temperature. Thus, in part, the suspension has a crystallized structure. The food ingredient further comprises an aqueous phase comprising water or milk or skim milk, such as a composition of at least 5% milk solids and at least 5% nutritive carbohydrate sweetener. The soluble starches or polysaccharides and protein present in at least the cocoa solids, or other cocoa product, are capable of forming a gel network in the suspension. Thus, in part, the suspension has a gelatinized structure. The insoluble particles from at least the cocoa, such as the cocoa cell wall materials, are dispersed within the gel network forming part of the suspension. While cocoa-containing compositions are routinely referred to, the invention is not limited to cocoa-containing compositions. Other food ingredients or edible compositions can be used.

In a specific embodiment, the food ingredient of the invention has at least 15%, or at least 18%, or at least 20% cocoa solids by weight in its final ingredient form or product form. Thus, the methods and ingredients and products of the invention can be used in the production of various chocolate products that fall within the standard of identity for chocolate, milk chocolate, bittersweet chocolate, and white chocolate that may exist in a desired market or under a particular regulatory setting. Furthermore, artificial or non-nutritive sweeteners can be used in conjunction with the invention to produce low calorie or low carbohydrate products or sugar free products. Also, vitamin and/or mineral food additives can be optionally added to improve the nutritional content of chocolate or cocoa-containing foods, for example.

In another aspect, the invention comprises a method of making a food ingredient where a fat or oil phase composition comprising cocoa butter, milk fat and/or other edible fat, and optionally an emulsifier, is mixed with an aqueous or continuous phase comprising water or milk. The mixing can be performed by a variety of methods known to the food and food ingredient industries, and specifically includes an homogenizer, dynamic mixer, or static mixer processes. After preparing the oil-in-water suspension, the mixture of the oil or fat phase with the aqueous or continuous phase can be heated under conditions where the protein and starch components of the cocoa solids, for example, produce a gel network. In general terms, the gel network is functionally a gelatinized composition having an increased viscosity compared to its pre-treatment or pre-heated form. It can be prepared from biopolymer-containing components, such as protein and/or carbohydrate containing components, particularly cocoa products, such as cocoa solids, and milk products, such as milk solids. One of skill in the art is familiar with methods and equipment for measuring the viscosity of compositions, including the compositions noted here. Without limiting the invention to any particular mechanism, the protein and/or soluble carbohydrate or starch components in a composition of food ingredients, such as a cocoa-containing composition, can be effectively swelled or water-saturated by particular treatments or heating processes depending on the components of the composition. In preferred treatments, the gel network formation occurs efficiently by heating to a range between 52°C to 68°C for cocoa-containing compositions. Gel network formation in the same cocoa-containing compositions can also occur through prolonged standing, with or without mechanical shearing. Functionally, the treating or heating step should disrupt the native protein conformation and/or swell carbohydrate or starch or bioploymer components from their existing state in order to form a gel network. Since the swelling of cocoa product components can take long periods of time and/or employ mechanical treatments, the preferred method of preparing a gel network according to this invention is by heating.

Once a gel network is formed or after a gel network is formed, an optional drying process can be incorporated into the treating or heating process, as noted above, or a drying or heating process can be additionally employed to reduce or manipulate the water activity level of the final product or composition. This heating or drying step can be separate from the treating or heating to form a gel network, or it can be incorporated as part of the treating or heating process to form a gel network by monitoring the evaporation of moisture from the product or composition. In general, any method can be used to heat, dry, or evaporate moisture from the product or composition to produce a desired water activity level. For chocolate or cocoa containing products or compositions, the water activity level is preferably below 0.9, more preferably between 0.75 and 0.65, or below 0.65, and it can be as low as about 0.33 or lower. In fact, several ranges of water activity can be used for final products or ingredients under the invention, such as 0.9 to 0.8, 0.85 to 0.8, 0.8 to 0.75, 0.75 to 0.65, 0.65 to 0.55, 0.55 to 0.45, 0.45 to 0.4, 0.4 to 0.35, 0.35 to 0.3, or below 0.35, or below 0.9, or any combination of these ranges.

Any appropriate measurement of water activity can be used, such as chilled mirror devices or electrical resistance or capacitance devices. In addition to the stated water activity levels above, the drying process can be used to functionally provide a safe moisture level to the final product or composition, such as a moisture level low enough to prevent the growth of undesirable microorganisms in the final product or composition under selected conditions for manufacturing, storage, and/or distribution. For some chocolate products, a water activity level below 0.65 is desired for normal, stable storage and distribution conditions. However, if certain microstructures and/or product densities and/or product characteristics are desired, a higher or lower water activity can be selected. Thus, the final product can vary from a creamy, pudding-like product or composition to a crisp, or chip-like product or composition. One of skill in the art is familiar with the use of deep bed driers, tray driers, belt driers, fluidized bed driers, tunnel driers, sun and solar driers, heated-surface driers, drum/roller driers, cooking extruder, vacuum and vacuum shelf driers, freeze driers, and any other drying or moisture-evaporating devices or processes to manipulate water activity levels.

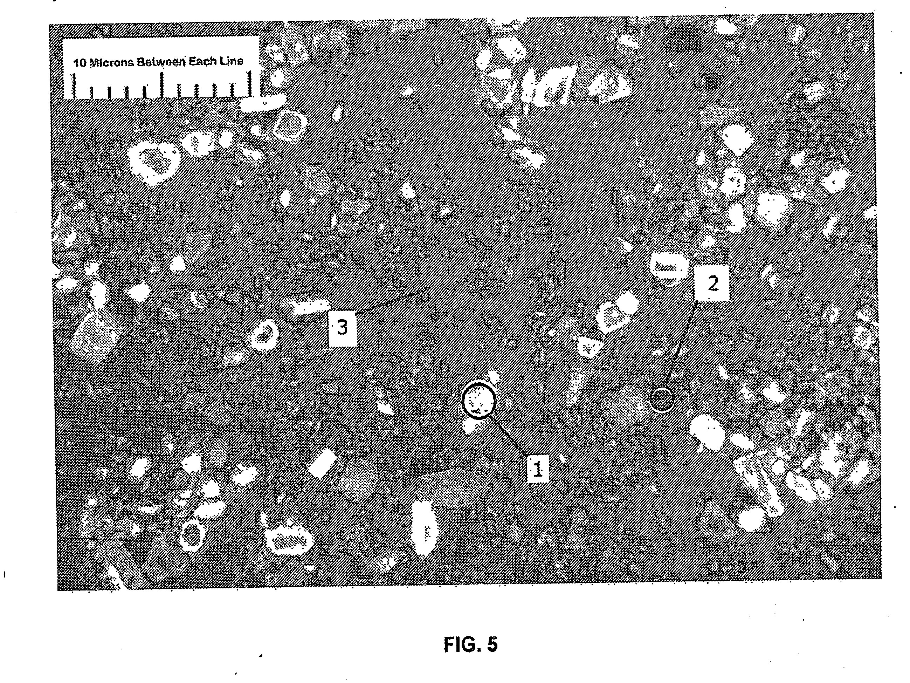

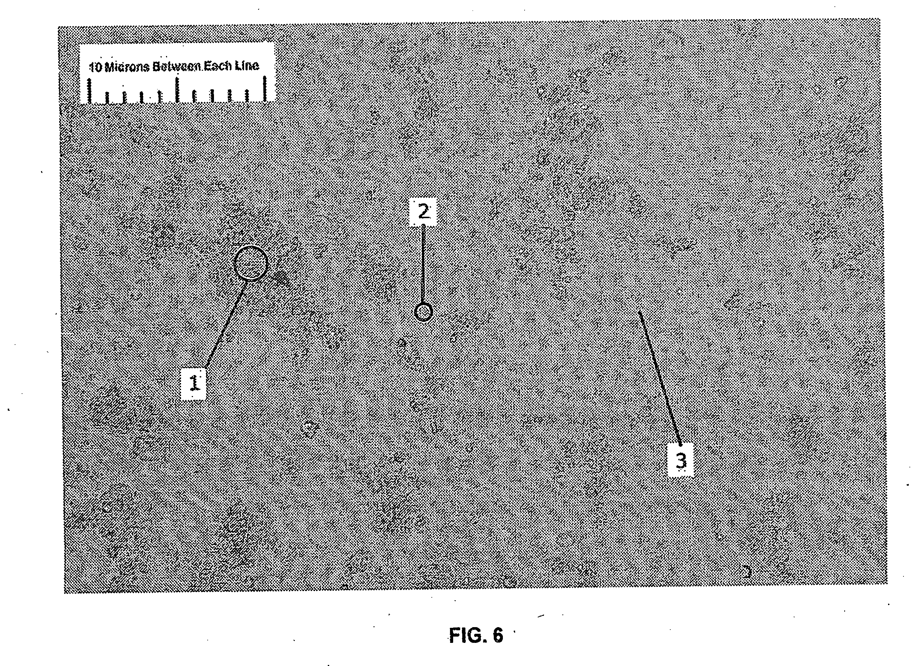

In the photomicrographs of Figures 5 and 6, one can see the difference between the treated or heated cocoa components and the same components after conventional cocoa processing. In general, the methods of the invention allow for a microstructure of cocoa-containing compositions or suspensions where the cocoa butter droplets can be from 0.5 to 100 microns in diameter, or more preferably 0.5 to 30 microns in diameter. Furthermore, the carbohydrate or starch components of the cocoa products used or the cell components from the cocoa products used are visibly swelled in the methods and products of the invention (see Figure 6), while in the conventional dark chocolate composition of Figure 5, by comparison, they are typically present as crystallized and/or amorphous components in the suspension. In addition, the sugar in the suspension of Figure 6 is dissolved in the continuous phase rather than in crystalline structures as shown in the conventional composition of Figure 5, thus leading to a more uniform and smoother texture.

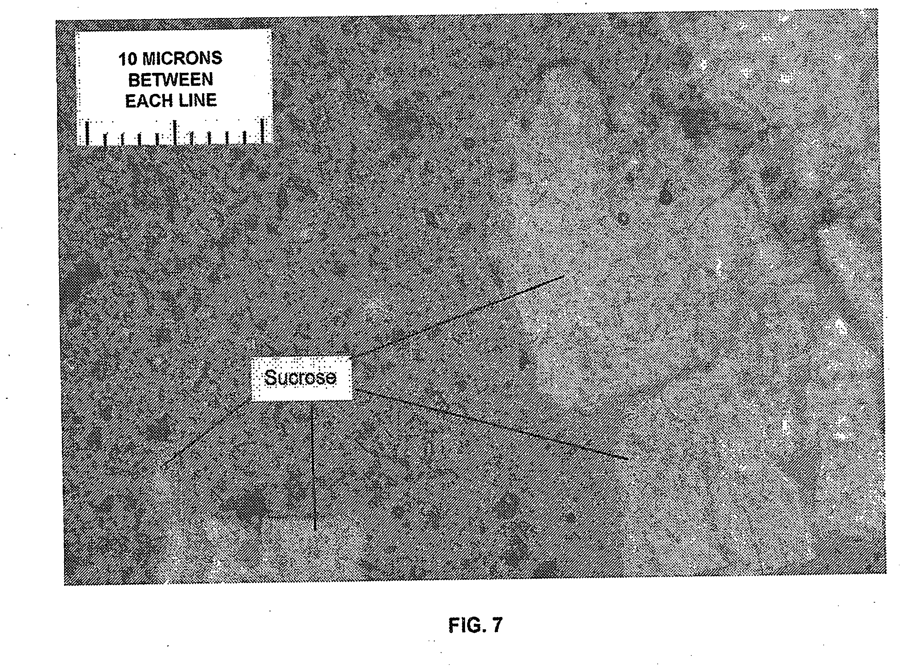

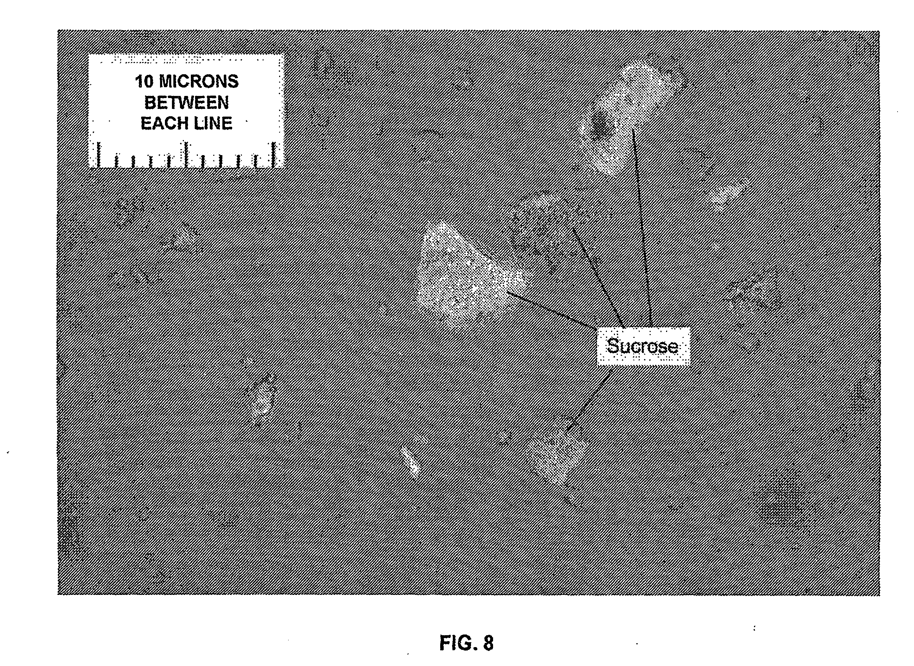

Figures 7 and 8 are photomicrographs after a drying process to reduce or manipulate the water activity level. By reducing the moisture to 4%, or a water activity of 0.3, the final chocolate product can be made into a dry or crisp structure, and/or where the sucrose might be partially recrystallized (as shown in the Figures). The low moisture products can thus be caramel-like or a crisp, chip texture. Accordingly, reducing or manipulating water or moisture levels from the continuous aqueous phase enables the artisan to achieve microbiological stability and flexibility in final texture to the product or composition. For example, if all the components are first dissolved in excess water, then the composition allowed to form a gel network structure, reducing the water or moisture level would initially results in caramel-like, highly viscous or relatively highly viscous oil-in-water suspension. Further drying or additional reduction in moisture creates a crisp chocolate product, whereby a structure of essentially immobilized and/or partially crystallized sucrose or sugar is formed. Thus, the invention provides very unique texture and viscosity possibilities for any selected confectionery products and chocolate products, in particular.

In another aspect, the invention provides a novel oil-in-water suspension at temperatures below the melting point of cocoa butter in a cocoa butter containing composition. In this and other aspects of the invention, cocoa butter is discussed as part of the fat or oil phase. However, other cocoa containing products can be used, such as cocoa liquor or cocoa powder. In addition, one of ordinary skill in the art is familiar with adding emulsifiers and/or hydrocolloids and/or other biopolymers to cocoa products, and emulsifiers and hydrocolloids and protein and starch compositions can optionally be added or replaced by cocoa butter in the food ingredients, products and compositions of the invention. Beyond cocoa butter or other cocoa products, additional fat components can be added in the methods to produce the food ingredients or products of the invention, especially including those with a melting point above room temperature or at or above 25°C or at or above 35°C. As shown below, fractionated and/or hydrogenated and/or interesterified palm kernel oil, palm oil, coconut oil, cottonseed oil, sunflower oil, canola oil, and corn oil, or cocoa butter substitute, for example, can be used as an edible oil with a melting point above room temperature.

In particular aspects, the invention includes processing a food ingredient into a processed product or composition. The processed products or compositions can be prepared by any method of the food and confectionery industry. For example, in-process steps can include adding components, such as adding vitamins, minerals, nuts, peanuts, peanut butter, almonds, caramel, edible inclusions, food grade gas, and one or more of the variety of ingredients available. Processing can also or in addition involve producing a marketable food product by coating, forming, molding, extruding, enrobing, injecting, baking, freezing, packaging, layering, rolling, cutting, depositing, panning, casting, or any other available method (*see,* for example, Minifie, "Chocolate, Cocoa, and Confectionery," 3d ed., Aspen Publishers). Additionally, filtration or separation processes can be included to, for example, remove substantially all insoluble particles from an ingredient or food product. As noted above, further or alternative processing steps may include drying of the composition or final product in order to produce a water activity level consistent with a microbiologically stable product. In general, microbiologically stable refers to a shelf life substantially similar to a conventional product of the same type.

As noted above, the preferred process for forming a gel network is heating. For the cocoa product containing compositions, heating the mixed oil and aqueous phases can comprise heating to 68°C for a period of time sufficient to form a gel network. In general, for cocoa containing products, cocoa starch can be formed into a gel network if it is subjected to a temperature of 52°C to 68°C, so any heating process that results in the cocoa starch reaching this temperature should suffice. Other, lower temperatures can also be selected and used if longer periods of time are employed. Higher temperatures for heating, for example to 121°C for 8.5 minutes, or to 150°C for at least 4 seconds, can be used in optional processing methods or optional sterilizing methods. Other methods include allowing the mixture to rest at room temperature for a period of time sufficient to form a gel network, or using high shear conditions, for example with a high pressure homogenizer.

In some of the many possible food products that can be produced, the food ingredient of the invention can be further processed into a product containing milk chocolate, sweet chocolate, bittersweet chocolate, semisweet chocolate, or white chocolate. In addition, the product can comprise one or more of chocolate liquor, cocoa powder, heavy cream, anhydrous milk fat, whey protein concentrates, non-fat milk protein, whole milk powder, sugar, lecithin, vanillin, and skim milk, as shown in the examples below.

In a more general aspect, the invention involves preparing an oil-in-water suspension using one or more cocoa containing products. The cocoa containing products are those processed from, or some degree of processed form of, the cacao bean that are commonly available. As noted above, certain microstructure environments can be created using the protein and starch components from the cacao bean products. While the production of oil-in-water emulsions in chemical processes is not new, the use of oil-in-water suspensions for cocoa containing products in particular, and food products more generally, is not common. In addition, the use of oil-in-water suspensions for chocolate products falling under one or more of the many standards of identity for these products has not been previously described. In another general aspect, the invention comprises preparing an edible gelatinized and crystallized microstructure within an oil-in-water suspension by using a gel network forming biopolymer containing product, such as a cocoa product, a milk product, a fruit product, a berry product, or a vegetable product. A gel network-forming amount of a biopolymer is used and the suspension comprises an aqueous phase and a dispersed oil or fat phase, wherein the gel network is capable of being formed from the biopolymer after heating the suspension, and the components of the oil or fat phase are at least partially crystallized at room temperature and stably present in the suspension. By the phrase "stably present in suspension," the components of the suspension remain substantially in suspension for a period of up to 3 months, or up to 6 months, or up to 8 months, or up to 12 months, or up to 18 months, or up to 24 months or longer. The microstructures of the dispersed phase can be selected to have a size of about 100 um or less in diameter while in the suspension. The food ingredient made from these suspensions can have a biopolymer originally provided in the form of a cocoa containing product, a fruit containing product, a berry containing product, or other similar product, or even a hydrocolloid containing product. This food ingredient can also or alternatively comprise a component in the oil or fat phase that is at least partially crystallized at room temperature and can be selected from one or more of cocoa butter, fractionated and/or hydrogenated and/or interesterified palm kernel oil, palm oil, coconut oil, cottonseed oil, sunflower oil, canola oil, and corn oil, 17-sterine, cocoa butter substitutes or equivalents, milk fat, or any oil or fat that is at least partially solid or crystallized at room temperature, or at 20°C, or at about 25°C, or at 30°C. In addition, the invention specifically includes a final food product that comprises any of the food ingredients noted or any food ingredient produced by a method noted throughout this disclosure.

As discussed here, the oil-in-water suspension refers to a suspension of, for example, oil droplets and/or insoluble particles in a continuous medium or phase, whereas in an emulsion, by contrast, all components are dissolved in the continuous phase. In general for the food rheology field, a suspension is at least one solid dispersed within a continuous phase, where the continuous phase is at least one liquid (*see, for example,* Van Nostrand's Scientific Encyclopedia, D. Van Nostrand Co., Inc., Princeton, New Jersey, 4th ed. 1968, pp. 620 and 1782; Rheologie der Lebensmittel, Weipert/Tscheuschner/Windhab, Behr's Verlag, Hamburg, Germany, 1993, pp. 108 and 122). The edible oil-in-water suspension of this invention refers to a dispersed phase of oil droplets and insoluble particles that are suspended in a substantially stably manner within an aqueous continuous phase, whereas in an emulsion all of the dispersed phase components must be liquid and are merely mixed in the continuous phase and are not, generally, stably suspended. Furthermore, emulsions do not necessarily employ the gel network as mentioned here. In fact, there are no reports of cocoa-based gel networks used to produce edible oil-in-water suspensions as described here. Thus, in general, the suspensions of the inventions comprise a dispersion of crystalline and/or non-soluble droplets and/or particles dispersed in a gel network or gelatinized continuous aqueous phase. While cocoa-based oil-in-water suspensions are noted as a preferred embodiment, other biopolymer-containing compositions can be used also.

In one aspect of a method of producing a cocoa-based oil-in-water suspension, the method involves mixing a fat phase comprising one or more cocoa products, including cocoa butter, and having cocoa protein and/or starch or carbohydrate components, with an aqueous phase. In preferred embodiments, the final non-fat cocoa solids content is at least 2% or 3% or 4% or more by weight of the final suspension. Also in preferred embodiments, the aqueous phase comprises water, a sugar or sweetener, or both, and/or milk and/or skim milk and/or cream. Other liquids or solutions can also be used as the aqueous phase and the invention specifically includes chocolate or cocoa compositions prepared without milk or milk products, even chocolate or cocoa beverages without milk. Once mixed, a swelling or heating step occurs to form a gel network comprised of cocoa proteins and cocoa starch components. The formation of a gel network can be detected by a variety of methods known in the art, including microscopy, direct viscosity measurements, ultrasonic methods, and light scattering methods. If a viscosity measurement is used, one preferred detectable change is where the viscosity of the suspension increases after heating when measured as shear rate. More particularly, the viscosity increase is at least about two-fold or double in the measurable 30sec-1 shear rate. In the optional drying or reducing water activity process, noted above, reducing moisture from the continuous phase produces further viscosity increases, which may depend upon the desired, final moisture level and the desired, final texture. As one of skill in the art will understand, at a certain water activity level the texture and/or density of a final product will essentially stabilize as if a solid. If microscopy is used, one of skill in the art can measure gel formation by the effects on the final suspension and the appearance of component parts within the suspension. For example, starch granules in cocoa-containing compositions can be visualized prior to swelling but not after gelatinization. Cocoa butter droplets can be visualized in the suspension at about room temperature in the range of between 0.5-100 um, or between 0.5-30 um. Again, if the optional drying or reducing moisture process is employed, certain sugars or components may be partially re-crystallized in the microscopic view of the final product or compostion.

Throughout this disclosure, applicants refer to journal articles, patent documents, published references, web pages, and other sources of information. One skilled in the art can use the entire contents of any of the cited sources of information to make and use aspects of this invention. Each and every cited source of information is specifically incorporated herein by reference in its entirety. Portions of these sources may be included in this document as allowed or required. However, the meaning of any term or phrase specifically defined or explained in this disclosure shall not be modified by the content of any of the sources. The description and examples that follow are merely exemplary of the scope of this invention and content of this disclosure and do not limit the scope of the invention. In fact, one skilled in the art can devise and construct numerous modifications to the examples listed below without departing from the scope of this invention.

### Brief Description of the Drawings

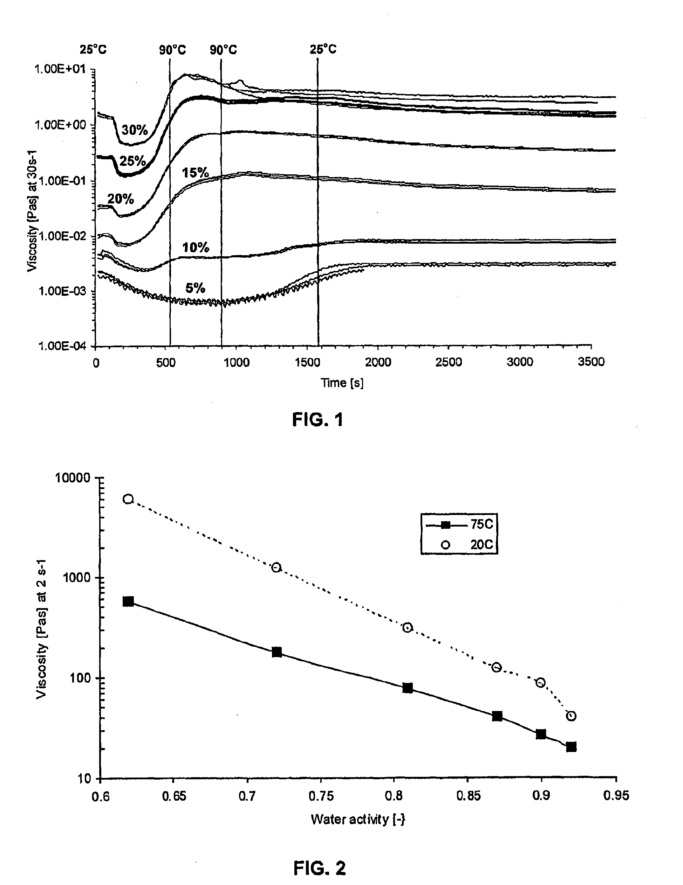

Figure 1 depicts a graph of the viscosity of a various cocoa compositions during a heating or treating process to form a gel network over time and before any drying process to reduce the water activity level. The levels of cocoa powder in water used in each composition are indicated next to each curve (5%, 10%, 15%, 20%, 25%, and 30%). The heating temperature is indicated at the top. The results show the impact of heating on the formation of a higher viscosity gel network from the components of the cocoa powder. In each case, some change or increase in viscosity can be seen during heating. However, marked increases in viscosity are apparent at 15% cocoa powder and above.
Figure 2 shows data points of the changes in viscosity of a final product or composition with changes in water activity level at different temperatures. In general, an increase in viscosity accompanies a reduction in water activity.

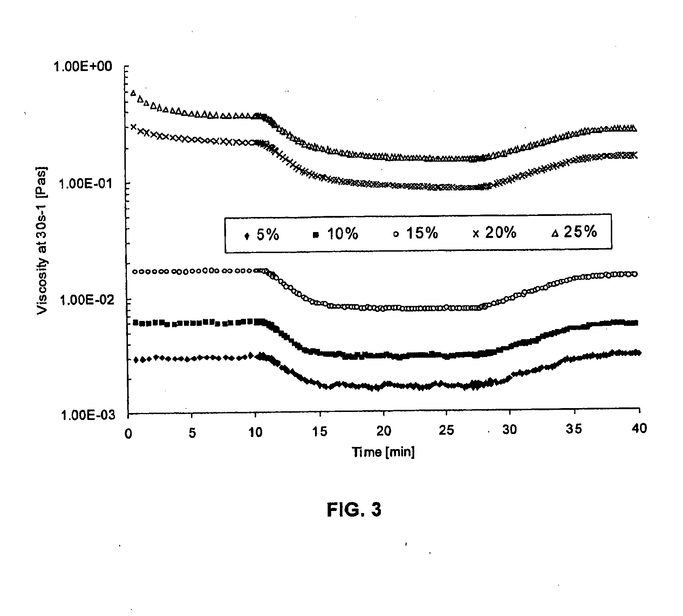

Figure 3 shows the viscosity characteristics of cocoa butter and skim milk compositions at various (5%, 10%, 15%, 20%, and 25%) concentrations of cocoa butter and over a temperature change. At these temperatures and these periods of time, the change in viscosity represents a change in the crystallization state of cocoa butter droplets in the compositions. From 0-10 minutes, each composition was kept at 20°C; at 10 minutes each composition was heated until it reached 45°C at 15 minutes, where the temperature is maintained for 12 minutes. After the heating period, the compositions are allowed to return to 20°C. Viscosity measurements over the changing temperature reflect the melting of oil in the cocoa butter droplets. As is the case in conventional cocoa and chocolate containing compositions, the higher the cocoa butter content the higher the viscosity. Here and throughout this disclosure unless otherwise stated, a TA Instruments AR2000 concentric cylinder is used, DIN 53 019, and a shear rate of 30/sec.

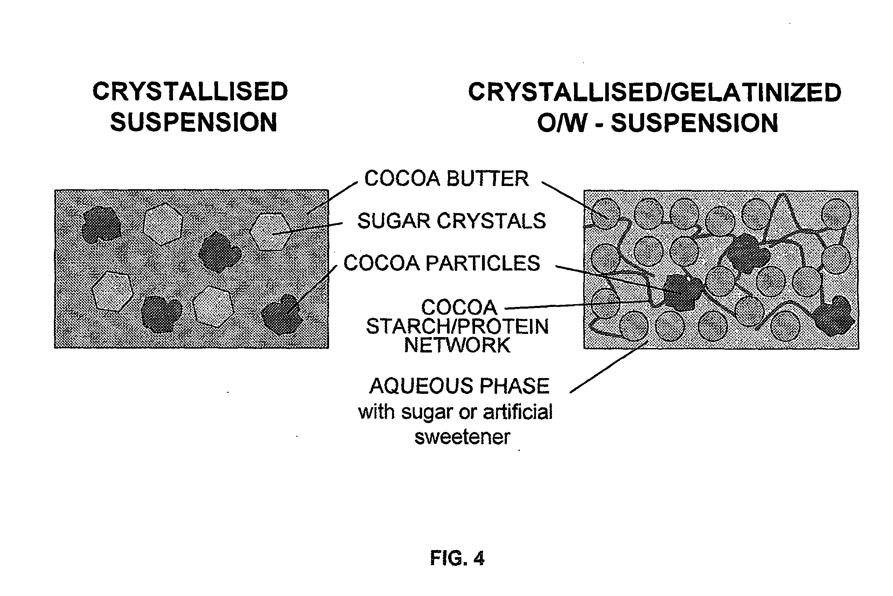

Figure 4 schematically represents the differences between a conventional composition ("Crystallized Suspension") and the compositions of the invention ("Crystallized/Gelatinized O/W Suspension"). In the conventional composition, cocoa butter is the continuous phase in the suspension. The level of cocoa butter, the solubility of components in cocoa butter, and the physical properties of the suspension, among other things, necessarily limit the characteristics and additives available if one desires to produce a chocolate product or ingredient falling within the standard of identity for chocolate in many countries of the world. In general, hydrophilic molecules are not soluble in oil, or an oil phase like cocoa butter. Consequently, the microstructure of such an oil and hydrophilic combination is referred to as a suspension. However, one fat or oil can be dissolved within another fat or oil, sometimes with an added emulsifier. In contrast, the oil-in-water suspension of the invention contains a continuous phase that can actually be an aqueous phase and the additives and variety and proportion of components is increased and is not limited to fats or oils.
Figure 5 is a photomicrograph showing a diluted conventional chocolate composition. Sugar crystals are indicated at (1). Cell wall particles from the cocoa are indicated at (2). The continuous phase is labeled (3).
Figure 6 is a photomicrograph of a diluted cocoa composition of the invention or one prepared according to the methods of the invention. The aqueous phase or continuous phase of the suspension is marked at (3). Number (1) points to a fragment or element of the gel network formed by starch and/or protein components, here from cocoa, and can include the cell wall components of cocoa. Crystallized cocoa butter droplets are present in the suspension and the refraction from droplets can be seen as lipid or fat droplets, as pointed out in (2).
Figures 7 and 8 are photomicrographs of samples diluted in oil from a preparation of dried cocoa compositions prepared according to the optional process of drying or reducing water activity levels. Partially re-crystallized sucrose is labeled.

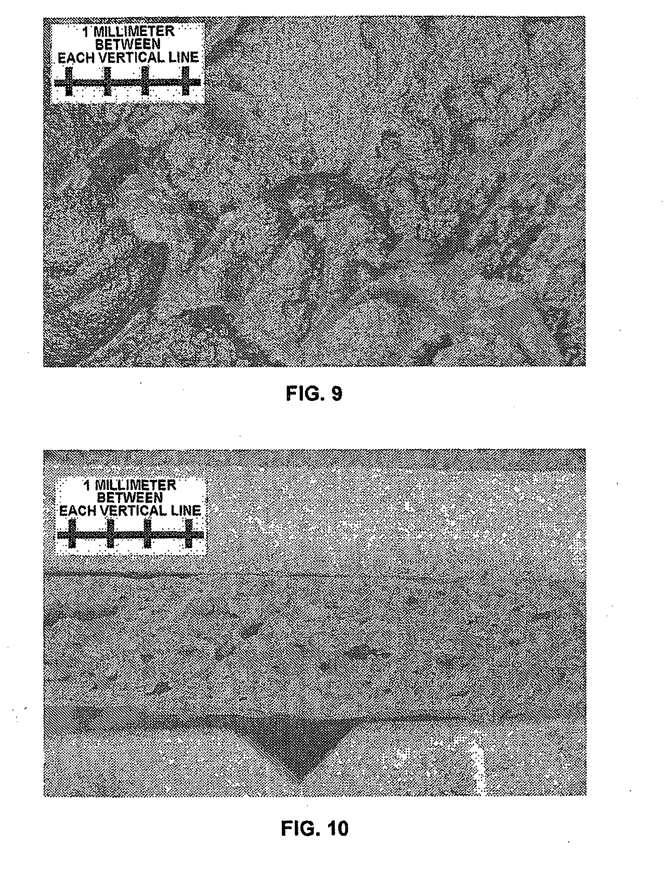

Figure 9 is a photo of a partially dried oil-in-water suspension of the invention displaying a caramel-like viscosity.
Figure 10 is a photo an oil-in-water suspension of the invention following the optional drying to produce a crisp texture with very low water activity.

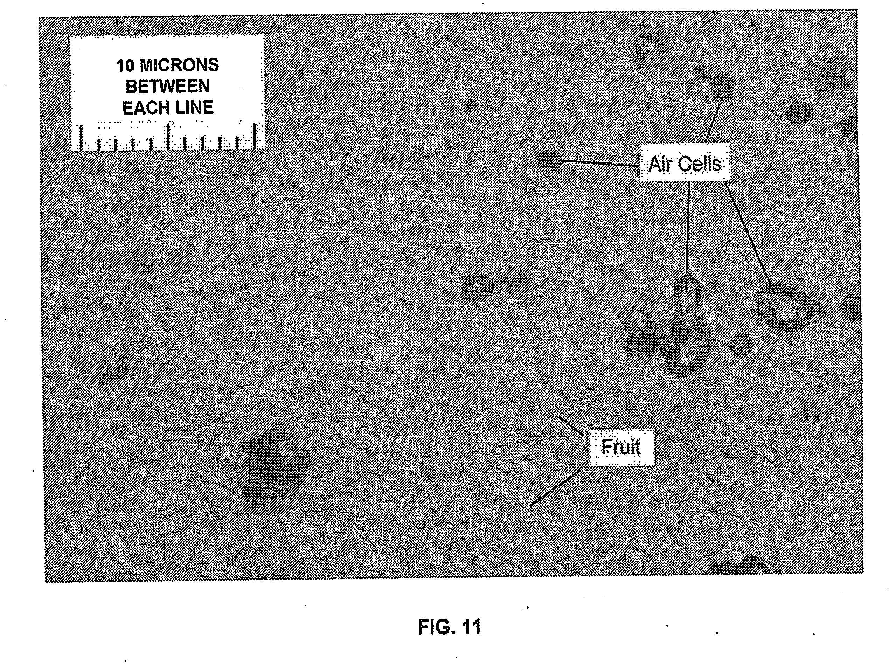

Figure 11 is a photomicrograph of a dried oil-in-water suspension of the invention produced from fruit puree. The non-soluble fruit particles are labeled and air pockets or cells within the structure are present where moisture has been dried off. The water activity of such a structure would be low.

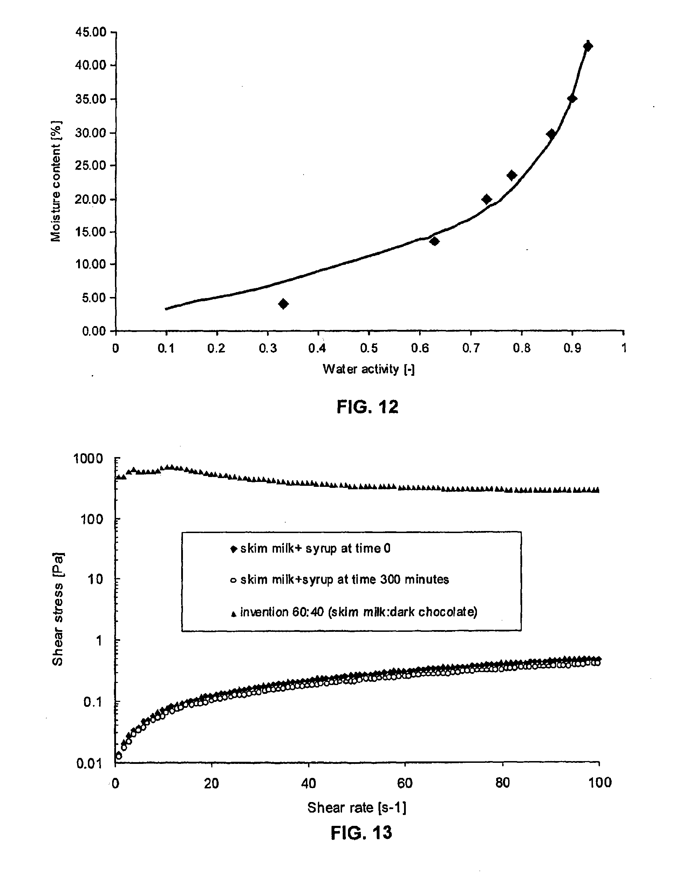

Figure 12 shows data points and a predicted graph (*see* Lewicki P.P., Journal of Food Engineering 43 (2000), pp. 31-40) of the changes in water activity levels as moisture content changes. Different representative graphs would reflect different ingredients, such that the water activity of a salt composition would generally be lower than the water activity of a glucose composition at the same moisture content.
Figure 13 shows a comparison of conventional chocolate drinks ("o" skim milk + chocolate syrup and "◆" after 5 hours) to a composition prepared according to the invention ("▲"). The viscosity is much higher for the compositions of the invention.

### Detailed Description of Exemplary Embodiments

In general and as used in this invention, the various chocolate and cocoa-containing products and compositions noted here refer to the terms as used in Minifie (Chocolate, Cocoa, and Confectionery, 3d ed., Aspen Publishers), specifically incorporated herein by reference. The cacao bean refers to the cacao bean, also called cocoa bean, in nature and a cocoa containing product is a product derived from or having some component derived from the cocoa bean. The nib refers to the cacao bean without the shell and is approximately 54% fat and 46% non fat solids on a dry basis. Non fat cocoa solids are the processed non fat solids of chocolate liquor. Cocoa powder refers typically to cocoa solids with a total of 10% to 12% fat, where the fat is generally cocoa butter. Breakfast cocoa is cocoa solids with 20 to 24% fat, where the fat is generally cocoa butter. Chocolate liquor (or cocoa liquor) is ground cocoa nibs and it can be separated into cocoa butter and cocoa solids. Cocoa butter is the fat component of chocolate liquor, whereas the remaining part of chocolate liquor is cocoa solids or the cocoa mass. As one of skill in the art understands, a certain amount or percentage of cocoa solids in a food ingredient can be achieved, *inter alia,* by using or adding an amount of cocoa powder, chocolate liquor, or other chocolate or cocoa ingredient containing the requisite amount of cocoa solids. Similarly, a certain amount or percentage of cocoa butter in a food ingredient can be achieved, *inter alia,* by using or adding an amount of chocolate liquor or other chocolate or cocoa ingredient containing the requisite amount of cocoa butter. Furthermore, while many different countries specifically define food products containing cocoa or cocoa products as having certain ranges or ingredients, the terms chocolate, milk chocolate, and dark chocolate, are as used commonly in the US food industry and do not imply, unless stated otherwise, a specific content. In addition, while a cocoa containing product having a particular anti-oxidant or polyphenol level is not required, the invention encompasses the use of cocoa containing products with enhanced, altered, or increased levels of anti-oxidants or polyphenol compounds as compared to conventional cocoa containing products. Other nutritional, therapeutic, or preventative ingredients can be added as well, as known in the art.

As noted above, in one general aspect, the invention provides a method for producing a gel network or gelatinized structure with a cocoa-containing product. The following table depicts the results of using a heating a process with cocoa powder in water to generate a gelatinized suspension.

Table 1: Viscosity values of various cocoa powder in water compositions before and after heating to 90°C.

| Cocoa Powder [90% non-fat cocoa solids 10% cocoa butter] Wt/wt | Initial viscosity [mPas at 30 sec⁻¹] | Peak viscosity | Final viscosity |
|---|---|---|---|
| 5% | 2 | 0.5 | 3 |
| 10% | 4.5 | 4 | 8 |
| 15% | 11 | 130 | 70 |
| 20% | 30 | 750 | 350 |
| 25% | 300 | 3300 | 1500 |
| 30% | 1500 | 8200 | 2500 |

The results shown in Table 1 and Figure 1 compare various cocoa powder in water combinations and the production of a functional gel network, as determined by measuring viscosity. The cocoa powder and water is first mixed in a rotor stator mixer for about 5 sec to about 1 min or 2 min. A homogenizer or high pressure homogenizer can be used, which produces a minimum droplet size almost instantaneously. Then the compositions of cocoa powder in water are heat treated to produce a gel network. More specifically, cocoa powder is dissolved in water and a 12.2 ml sample poured into a concentric cylinder DIN 53 019 TA Instruments AR2000 Rheometer. A temperature sweep is performed from 25°C to 90°C at 10°C/min, holding at 8 minutes at 90°C, cooling from 90°C to 25°C at 10°C/min, and holding at 25°C for 40 minutes. A shear rate of 30/sec is used. At concentrations of about 5% cocoa powder, there is little effect on the viscosity, although it is increased compared to the pre-heating composition. Beginning at about 10% cocoa powder, the viscosity increase is about two-fold or more. Even at the low level of 8 mPas, it is possible to affect the viscosity of cocoa-containing products and ingredients. As one of skill in the art is aware, the ability to monitor changes in viscosity and the microstructure of compositions have a number of processing advantages, including stabilization. At and above 15%, there is a significant increase in measurable viscosity. The protein and starch components in cocoa products have been discussed in the past (*see, for example,* Voigt et al., Food Chemistry 47: 145-151 (1993); Schmieder and Keeney, J. Food Sci. 45: 555 (1981); Gellinger et al., Starch/Starke 33: 76-79 (1981)). However, none of these reports mentions the advantages of using the gelatinization of cocoa components to produce food products and ingredients as oil-in-water suspensions, or to produce stable suspensions with cocoa. In fact, the stable suspensions of this invention can be used to prepare cocoa or chocolate products that are stable for months, or from between about 3 months to about 2 years. Equivalent products using the prior methods, such as for example a chocolate drink or beverage, do not remain stable suspensions and must be mixed or shaken. Furthermore, the products and ingredients of the invention can be designed to provide superior characteristics through a broader range of temperatures, such as freezing temperatures, freezing and thawing conditions, and long term room temperature storage, for example. Food emulsions used today do not have these characteristics. In addition, the optional drying or reducing water activity process can provide further texture or viscosity options and/or microbiological stability. As noted above and shown in the Examples, water activity levels can be in the range of 0.85 for creamy products, about 0.65 for chewy products, and 0.35 for crispy products.

Using this basic principle and using the ability of cocoa containing compositions to produce a gel network, examples using a variety of other cocoa containing products and other products can be used. In addition, other ingredients commonly used in chocolate products or defined by the standard of identity for certain chocolate products can be used. For example, chocolate liquor (cocoa and cocoa butter), cocoa butter, milk, concentrated milk, evaporated milk, sweetened condensed milk, dried milk, skim milk, concentrated skim milk, evaporated skim milk or sweetened condensed skim milk, cocoa powder, heavy cream, flavors, whey protein, anhydrous milk fat, non fat milk protein, whole milk powder, soy milk, soy milk proteins, lecithin, sugar and different corn syrups can be used. In general, moisture levels or water activity levels are not generally mentioned in the chocolate product standard of identity. Therefore, the invention can be used to manipulate a variety of ingredients, and substitute a variety of ingredients, for those previously used in chocolate products. While cocoa containing gel networks are described in detail in the examples, the invention is not limited to cocoa-based gel networks and suspensions involving cocoa products. Other biopolymer compositions, such as those containing fruit or fruit puree, proteins, hydrocolloids, polysaccharides, and the like can be used to produce a gel network and combined with at least one fat component having a melting point higher than room temperature, or higher than 20°C, or higher than 20-25°C. In addition, other ingredients or additional ingredients, such as fruit products, nuts, nut products, and other larger particle additives can be used in the gelatinized/crystalized suspensions of the invention, such as in certain fruit pudding compositions. In fact, any compatible group or set of ingredients can be selected as long as the components do not substantially inhibit the formation of or substantially destroy or substantially reduce the gel network forming properties of the biopolymer components selected.

### Examples

Using the typical ingredients and substitutions available to the food and confectionery artisan, one can combine the cocoa products, such as cocoa powder above, in a solution to generate a gel network. As an example, in the Examples 1-3 below, the ingredients can be prepared first as fat or oil phase ingredients (for example cocoa butter containing product, such as chocolate liquor) and water or aqueous ingredients (for example milk or skim milk). In addition, typical ingredients for one or more of the chocolate products or food ingredients of the invention include one or more of soy lecithin or lecithin, cream, milk fat, butter, concentrated milk, evaporated milk, concentrated skim milk, evaporated skim milk, concentrated buttermilk, dried buttermilk, malted milk, dried milk, sweeteners, and vegetable fat. After the fat or oil phase ingredients are mixed, the two groups of ingredients (i.e., the aqueous phase and the oil phase) are mixed and/or homogenized and heated to a desired temperature, for example 65°C, or 52°C to 68°C for inducing a gel network with cocoa-based components. As an optional step, heating to 120°C for 15 minutes for sterilization in addition to gel network formation can be used. One of skill in the art is familiar with ultra high temperature or ultra high temperature and pressure sterilization processes that can be selected or adapted for use. Alternatively, swelling in solution can occur after longer periods of time.

Specific examples can be selected using the standards of identity for various countries, including:

U.S. Standard of Identity for Chocolate Products: for semisweet or bittersweet chocolate 35% or more chocolate liquor and less than 12% total milk solids; for milk chocolate 10% or more chocolate liquor, 3.39% or more milk fat, and 12% or more total milk solids; and for white chocolate 3.5% or more milk fat, 14% or more total milk solids, 20% or more cocoa butter, and 55% or less nutritive carbohydrate sweetener.

The CODEX chocolate standards: for chocolate 35% or more total cocoa solids, 18% or more cocoa butter, and 14% or more fat-free cocoa solids; for sweet chocolate 30% or more total cocoa solids, 18% or more cocoa butter, and 12% or more fat-free cocoa solids; for milk chocolate 25% or more total cocoa solids, 2.5% or more fat-free cocoa solids, between 12% and 14% milk solids, and between 2.5% and 3.5% milk fat; for white chocolate 20% or more cocoa butter, 14% or more milk solids, and between 2.5% and 3.5% milk fat.

The Brazilian standard of identity: chocolate (milk and dark) 25% or more total cocoa solids; for white chocolate 20% or more total cocoa butter solids.

The European standard Relating to Cocoa and Chocolate Products: chocolate 35% or more total cocoa solids, 18% or more cocoa butter, and 14% or more fat-free cocoa solids; for milk chocolate 25% or more total cocoa solids, 2.5% or more fat-free cocoa solids, 14% or more milk solids, 3.5% or more milk fat, and 25% or more total fat (cocoa butter, cocoa butter equivalents (CBE), and milk fat); for white chocolate 20% or more cocoa butter, 14% or more milk solids, 3.5% or more milk fat.

The Canadian standard for Cocoa and Chocolate Products: for bittersweet or semisweet chocolate 35% or more total cocoa solids (from liquor, cocoa butter or cocoa powder), 18% or more cocoa butter, 14% or more fat-free cocoa solids, and 5 % or less milk solids; for milk chocolate 25% or more total cocoa solids (from liquor, cocoa butter or cocoa powder), 15% or more cocoa butter, 2.5 % or more fat-free cocoa solids, 12% or more total milk solids, 3.39% or more milk fat; for white chocolate 20% or more cocoa butter, 14% or more milk solids, 3.5% or more milk fat.

The Mexican standard of identity: for chocolate 35% or more total cocoa solids, 18% or more cocoa butter, 14% or more nonfat cocoa solids; for bitter chocolate 40% or more total cocoa solids, 22% or more cocoa butter, 18% or more nonfat cocoa solids; semibitter chocolate 30% or more total cocoa solids, 15.6% or more cocoa butter, 14% or more nonfat cocoa solids; milk chocolate 25% or more total cocoa solids, 20% or more cocoa butter, 2.5% or more nonfat cocoa solids, 14% or more total milk solids, 2.5% or more milk fat, and 40% or more total cocoa and milk solids; for white chocolate 20% or more total cocoa solids, 20% or more cocoa butter, 14% or more total milk solids, 3.5% or more milk fat, and 34% or more total cocoa and milk solids.

The following three examples demonstrate the possible changes in chocolate product ingredients that can be used. These recipes can be manipulated to follow or take into consideration any of the above-mentioned, or any other for that matter, standard of identity for a chocolate product or ingredient. There are advantageous properties in at least the reduction of calories and the reduction in costs. Additional advantages include the ability to manipulate viscosity levels and produce desirable microstructures. The percentage listed in the Examples below are approximate and one of skill in the art can vary the percentages and even use additional components of the recipes without departing from the invention.

The first set of Examples relates most directly to the gel network formation aspect of the invention and the process of reducing the water activity is not shown. Examples 6 and later show the results of drying or water activity manipulating methods of the invention in particular.

### EXAMPLE 1:

| Recipe **01** | [%] | [kcal] |
|---|---|---|
| chocolate liquor | **23** | 151.0 |
| anhydrous milk fat | **3.4** | 30.5 |
| NFMP | **3.1** | 10.8 |
| Sugar | **20** | 79.9 |
| Lecithin | **0.1** | 0.9 |
| skim milk | **50.4** | 11.2 |
| | | |
| calories [kcal/100g] | | 284.4 |
| REDUCTION CAL [%] | | 47 |

### EXAMPLE 2:

| Recipe **02** | [%] | [kcal] |
|---|---|---|
| chocolate liquor | **10.75** | 70.6 |
| heavy cream | **8.7** | 34.8 |
| NFMP | **3.23** | 11.3 |
| Sugar | **21.5** | 85.9 |
| lecithin | **0.1** | 0.9 |
| skim milk | **55.72** | 12.4 |
| | | |
| Calories [kcal/100g] | | 215.8 |
| REDUCTION CAL [%] | | 60 |

### EXAMPLE 3:

| Recipe **03** | [%] | [kcal] |
|---|---|---|
| chocolate liquor | **13** | 85.3 |
| heavy cream | **8.**1 | 32.4 |
| NFMP | **6** | 21.0 |
| Sugar | **20** | 79.9 |
| lecithin | **0.1** | 0.9 |
| skim milk | **52.8** | 11.7 |
| | | |
| calories [kcal/100g] | | 231.2 |
| REDUCTION CAL [%] | | 57 |

All of the chocolate products from the above three specific examples result in light textured, chocolatey flavored compositions that are generally light and indulgent in flavor. The reduction in calories listed above (Reduction Cal [%]) refers to a comparison with Hershey's Milk Chocolate bars. Products such as these are stable at room temperature and can be frozen and thawed without adversely changing the texture or mouthfeel. In addition, the invention reduces the cost of preparing a standard of identity chocolate product and reduces the total calories of a standard of identity chocolate product.

The chocolate products in Figure 6 employed a simple method of preparation as noted above. The Figure 5 sample is conventional semisweet chocolate product of the US market. To prepare the samples for microscopy, an aliquot is hand mixed with a spatula with 10 parts of mineral oil for Figure 5 and demineralized water in Figure 6. About 1/4 of drop is deposited on a clean glass slide, spread with spatula, and covered with a glass cover slip and pressed for uniform thickness. Images can be viewed with transmitted, polarized compensated light using 16x objectives and the image captured with digital camera. Figure 6 shows the microstructure of the gelatinized/crystallized oil-in-water suspension of the invention. Microparticles of cocoa bean material and cocoa butter oil droplets can be seen.

### EXAMPLE 4:

The following recipes can be used to produce an oil-in-water suspension of the invention without a cocoa product, although cocoa product can be used. The nuts and fruit particles, such as seeds for strawberries, can be part of the insoluble particles in the suspension. As above, the percentages given are approximate and one of skill in the art can vary the percentages and even add additional ingredients without departing from the invention.

| | |
|---|---|
| Strawberry puree | 56.8% |
| Sugar | 20% |
| Fractionated palm kernel oil (Cebes 27-75) | 20% |
| Tapioca Starch | 3% |
| Lecithin | 0.2% |
| | |
| Banana puree | 51.8% |
| Sugar | 20% |
| Fractionated palm kernel oil (Cebes 27-75) | 20% |
| Guar gum | 1% |
| Lecithin | 0.2% |
| Pecans, grinded | 7% |
| | |
| Pear puree | 54.3% |
| Sugar | 20% |
| 17-Sterine | 17% |
| Xanthan | 1.5% |
| Lecithin | 0.2% |
| Macadamia nuts, ground | 7% |
| Banana puree | 69.8% |
| Sugar | 20% |
| Cocoa Liquor | 10% |
| Lecithin | 0.2% |
| | |
| Strawberries puree | 69.8% |
| Sugar | 20% |
| Cocoa Liquor | 10% |
| Lecithin | 0.2% |

In each case above, the ingredients are mixed in a rotor stator mixer and then heated to 68°C. The products can be sterilized by longer term heating or ultra high temperature or ultra high temperature and pressure conditions prior to packaging. The fruit pudding examples, such as those above, allow one to produce stable products where the added ingredients, such as crushed nuts, stay in suspension over a period of time, for example 4 months or more.

### EXAMPLE 5:

The following recipes refer to a chocolate liquid or hot chocolate embodiments of the invention. As above, the ingredients are listed as approximate percentages and one of skill in the art can vary the percentages and even use additional ingredients without departing from the invention.

### Recipe 1

| | |
|---|---|
| Whole liquid milk | 68% |
| ADM 11-N Cocoa Powder | 2% |
| Hershey Special Dark paste | 30% |

### Recipe 2

| | |
|---|---|
| Liquid skim milk | 75% |
| ADM 11-N Cocoa Powder | 2% |
| Hershey Special Dark paste | 23% |

For recipes 1 and 2, milk is heated to 40°C in a kettle, run through a liquefier to mix for 3 minutes, homogenized at 1500psi and a second stage at 5psi, and then run through a MicroThermics UHT processor at 260° F for 8 seconds.

### Recipe 3

| | |
|---|---|
| Milk (2% milk) | 74% |
| NFMP | 2.5% |
| ADM 11-N cocoa powder | 2.5% |
| Hershey Special Dark paste | 21% |

For recipe 3 above, the ingredients are mixed together with a rotor/stator mixer and cooked in an open pan to 90°C.

In each case, the resulting suspensions for recipes 1-3 above remain stable at room temperature, have a good chocolatey flavor, and good mouthfeel.

Reducing Water Activity/Manipulating Viscosity or Texture. As noted above, in preparing or after an oil-in-water suspension is created, the composition can be dried or the water activity level manipulated to produce a final product or composition. In the Examples below, a 2000g sample of the initial oil-in-water suspension is mixed with a batch rotor/stator mixer (Silverson L4RT) at 9000 rpm for 30 seconds, homogenized at 300/30 bar (Soavi Panda 2K) and transferred to an open atmosphere cooker (Bottom Line 0306040). Temperature is set to 280°F and rotor speed to 40 rpm. Samples at various times (Sample 01-06) are taken out of the pan in order to measure moisture and water activity values. The rest of Sample 06 is spread (height 6 mm) on a tray and put into a vacuum oven (Cole-Palmer N-05053-20) at 53°C and -100kPa to produce Sample 07. Water activity is determined using a Decagon Aqualab dew point meter (CX-2T) at 25°C and moisture is measured using a Turbo Karl Fischer instrument (Metrohm Titrino Titrator 701/10).

### EXAMPLE 6:

| Recipe **Initial** | [%] | [kcal] |
|---|---|---|
| chocolate liquor: sugar 50:50 | **14** | 91.9 |
| heavy cream | **5** | 20.0 |
| NFMP | **8** | 28.0 |
| Sugar | **20** | 79.9 |
| Lecithin | **0.3** | 2.7 |
| skim milk | **52.7** | 11.7 |
| | | |
| calories [kcal/100g] | | 234.2 |
| REDUCTION CAL [%] | | 57 |

### EXAMPLE 7:

| Sample **01** | [%] | [kcal] |
|---|---|---|
| chocolate liquor: sugar 50:50 | **16.0** | 84.6 |
| Heavy cream | **2.9** | 11.4 |
| NFMP | **15.2** | 53.1 |
| Sugar | **22.9** | 91.5 |
| Lecithin | **0.3** | 3.1 |
| moisture | **42.7** | |
| | **100.0** | |
| calories [kcal/100g] | | 243.7 |
| REDUCTION CAL [%] | | 55 |
| Moisture [%] | | 42.7 |
| Water activity [-] | | 0.93 |

### EXAMPLE 8:

| Sample **02** | [%] | [kcal] |
|---|---|---|
| chocolate liquor: sugar 50:50 | **18.1** | 95.9 |
| Heavy cream | **3.2** | 12.9 |
| NFMP | **17.2** | 60.2 |
| Sugar | **25.9** | 103.6 |
| Lecithin | **0.4** | 3.5 |
| moisture | **35.1** | |
| | **100.0** | |
| | | |
| Calories [kcal/100g] | | 276.1 |
| REDUCTION CAL [%] | | 49 |
| Moisture [%] | | 35.1 |
| Water activity [-] | | 0.9 |

### EXAMPLE 9:

| Sample **03** | [%] | [kcal] |
|---|---|---|
| chocolate liquor: sugar 50:50 | **19.7** | 103.8 |
| Heavy cream | **3.5** | 14.0 |
| NFMP | **18.6** | 65.2 |
| Sugar | **28.1** | 112.2 |
| Lecithin | **0.4** | 3.8 |
| moisture | **29.7** | |
| | **100.0** | |
| | | |
| Calories [kcal/100g] | | 299.0 |
| REDUCTION CAL [%] | | 45 |
| Moisture [%] | | 29.7 |
| Water activity [-] | | 0.86 |

### EXAMPLE 10:

| Sample 04 | [%] | [kcal] |
|---|---|---|
| chocolate liquor: sugar 50:50 | 21.4 | 113.0 |
| heavy cream | 3.8 | 15.3 |
| NFMP | 20.3 | 70.9 |
| Sugar | 30.6 | 122.1 |
| Lecithin | 0.5 | 4.1 |
| moisture | 23.5 | |
| | 100.0 | |
| | | |
| Calories [kcal/100g] | | 325.4 |
| REDUCTION CAL [%] | | 40 |
| Moisture [%] | | 23.5 |
| Water activity [-] | | 0.78 |

### EXAMPLE 11:

| Sample **05** | [%] | [kcal] |
|---|---|---|
| chocolate liquor: sugar 50:50 | **22.4** | 118.3 |
| heavy cream | **4.0** | 16.0 |
| NFMP | **21.2** | 74.3 |
| Sugar | **32.0** | 127.9 |
| Lecithin | **0.5** | 4.3 |
| Moisture | **19.9** | |
| | **100.0** | |
| | | |
| calories [kcal/100g] | | 340.7 |
| REDUCTION CAL [%] | | 37 |
| Moisture [%] | | 19.9 |
| Water activity [-] | | 0.73 |

### EXAMPLE 12:

| Sample **06** | [%] | [kcal] |
|---|---|---|
| chocolate liquor: sugar 50:50 | **24.2** | 127.6 |
| heavy cream | **4.3** | 17.2 |
| NFMP | **22.9** | 80.1 |
| Sugar | **34.5** | 137.9 |
| Lecithin | **0.5** | 4.7 |
| moisture | **13.6** | |
| | **100.0** | |
| | | |
| calories [kcal/100g] | | 367.5 |
| REDUCTION CAL [%] | | 32 |
| Moisture [%] | | 13.6 |
| Water activity [-] | | 0.63 |

### EXAMPLE 13:

| Sample **07** | [%] | [kcal] |
|---|---|---|
| chocolate liquor: sugar 50:50 | **26.8** | 141.6 |
| heavy cream | **4.8** | 19.1 |
| NFMP | **25.4** | 88.9 |
| Sugar | **38.3** | 153.0 |
| Lecithin | **0.6** | 5.2 |
| moisture | **4.1** | |
| | **100.0** | |
| | | |
| Calories [kcal/100g] | | 407.8 |
| REDUCTION CAL [%] | | 25 |
| Moisture [%] | | 4.12 |
| Water activity [-] | | 0.33 |

In addition, in any of the above examples or in the invention in general, micronized particles, ingredients, fat droplets, or the like can be used in addition to or as a substitute the a particular ingredient. The micronized components may further define a desired microstructure for a particular product or may provide beneficial stability characteristics to the product. One of skill in the art could select any available micronization technique and/or products for use.

### EXAMPLE 14:

| Recipe **INITIAL** | [%] | [kcal] |
|---|---|---|
| chocolate liquor: sugar 50:50 | **14** | 91.9 |
| heavy cream | **5** | 20.0 |
| NFMP | **8** | 28.0 |
| Sugar | **20** | 79.9 |
| Lecithin | **0.3** | 2.7 |
| skim milk | **52.7** | 11.7 |
| | | |
| calories [kcal/100g] | | 234.2 |
| REDUCTION CAL [%] | | 57 |

### EXAMPLE 15:

| Sample **01** | [%] | [kcal] |
|---|---|---|
| chocolate liquor: sugar 50:50 | **16.0** | 84.6 |
| heavy cream | **2.9** | 11.4 |
| NFMP | **15.2** | 53.1 |
| Sugar | **22.9** | 91.5 |
| Lecithin | **0.3** | 3.1 |
| Moisture | **42.7** | |
| | | |
| calories [kcal/100g] | | 234.7 |
| REDUCTION CAL [%] | | 55 |
| Moisture [%] | | 42.7 |
| Water activity [-] | | 0.93 |

### EXAMPLE: 17

| Sample **02** | [%] | [kcal] |
|---|---|---|
| chocolate liquor: sugar 50:50 | **18.1** | 95.9 |
| heavy cream | **3.2** | 12.9 |
| NFMP | **17.2** | 60.2 |
| Sugar | **25.9** | 103.6 |
| Lecithin | **0.4** | 3.5 |
| Moisture | **35.1** | |
| | | |
| calories [kcal/100g] | | 276.1 |
| REDUCTION CAL [%] | | 49 |
| Moisture [%] | | 35.1 |
| Water activity [-] | | 0.9 |

### EXAMPLE 18:

| Sample **03** | [%] | [kcal] |
|---|---|---|
| chocolate liquor: sugar 50:50 | **19.7** | 103.8 |
| heavy cream | **3.5** | 14.0 |
| NFMP | **18.6** | 65.2 |
| Sugar | **28.1** | 112.2 |
| Lecithin | **0.4** | 3.8 |
| Moisture | **29.7** | |
| | | |
| calories [kcal/100g] | | 299.0 |
| REDUCTION CAL [%] | | 45 |
| Moisture [%] | | 29.7 |
| Water activity [-] | | 0.86 |

### EXAMPLE 19:

| Sample **04** | [%] | [kcal] |
|---|---|---|
| chocolate liquor: sugar 50:50 | **21.4** | 113.0 |
| heavy cream | **3.8** | 15.3 |
| NFMP | **20.3** | 70.9 |
| Sugar | **30.6** | 122.1 |
| Lecithin | **0.5** | 4.1 |
| Moisture | **23.5** | |
| | | |
| calories [kcal/100g] | | 325.4 |
| REDUCTION CAL [%] | | 40 |
| Moisture [%] | | 23.5 |
| Water activity [-] | | 0.78 |

### EXAMPLE 20:

| Sample **05** | [%] | [kcal] |
|---|---|---|
| chocolate liquor: sugar 50:50 | **22.4** | 118.3 |
| heavy cream | **4.0** | 16.0 |
| NFMP | **21.2** | 74.3 |
| Sugar | **32.0** | 127.9 |
| Lecithin | **0.5** | 4.3 |
| Moisture | **19.9** | |
| | **100.0** | |
| calories [kcal/100g] | | 340.7 |
| REDUCTION CAL [%] | | 37 |
| Moisture [%] | | 19.9 |
| Water activity [-] | | 0.73 |

### EXAMPLE 21:

| Sample **06** | [%] | [kcal] |
|---|---|---|
| chocolate liquor: sugar 50:50 | **24.2** | 127.6 |
| heavy cream | **4.3** | 17.2 |
| NFMP | **22.9** | 80.1 |
| Sugar | **34.5** | 137.9 |
| Lecithin | **0.5** | 4.7 |
| Moisture | **13.6** | |
| | **100.0** | |
| calories [kcal/100g] | | 367.5 |
| REDUCTION CAL [%] | | 32 |
| Moisture [%] | | 13.6 |
| Water activity [-] | | 0.63 |

### EXAMPLE 22:

| Sample **07** | [%] | [kcal] |
|---|---|---|
| chocolate liquor: sugar 50:50 | **26.8** | 141.6 |
| heavy cream | **4.8** | 19.1 |
| NFMP | **25.4** | 88.9 |
| Sugar | **38.3** | 153.0 |
| Lecithin | **0.6** | 5.2 |
| | | |
| Moisture | **4.1** | |
| | **100.0** | |
| calories [kcal/100g] | | 407.8 |
| REDUCTION CAL [%] | | 25 |
| Moisture [%] | | 4.12 |
| Water activity [-] | | 0.33 |

### EXAMPLE 23:

| Sample **01** | [%] |
|---|---|
| chocolate liquor: sugar (50:50) | **15.0** |
| NFMP | **12.0** |
| Lecithin | **0.3** |
| Inulin | **5.0** |
| corn syrup high fructose | **8.0** |
| Water | **59.7** |
| Total | **100.0** |
| Water activity [-] | **0.96** |

### EXAMPLE 24:

| Sample **02** | [%] |
|---|---|
| chocolate liquor: sugar (50:50) | **19.9** |
| NFMP | **15.9** |
| Lecithin | **0.4** |
| Inulin | **6.6** |
| corn syrup high fructose | **10.6** |
| Water | **46.5** |
| Total | **100.0** |
| Water activity [-] | **0.94** |

### EXAMPLE 25:

| Sample **03** | [%] |
|---|---|
| chocolate liquor: sugar (50:50) | **26.0** |
| NFMP | **20.8** |
| Lecithin | **0.5** |
| Inulin | **8.7** |
| corn syrup high fructose | **13.9** |
| Water | **30.1** |
| Total | **100.0** |
| Water activity [-] | **0.86** |

### EXAMPLE 26:

| Sample **04** | [%] |
|---|---|
| chocolate liquor: sugar (50:50) | **28.8** |
| NFMP | **23.1** |
| Lecithin | **0.6** |
| Inulin | **9.6** |
| corn syrup high fructose | **15.4** |
| Water | **22.5** |
| Total | **100.0** |
| Water activity [-] | **0.78** |

### EXAMPLE 28:

| Sample **05** | [%] |
|---|---|
| Chocolate liquor: sugar (50:50) | **36.0** |
| NFMP | **28.8** |
| Lecithin | **0.7** |
| Inulin | **12.0** |
| corn syrup high fructose | **19.2** |
| Water | **3.2** |
| Total | **100.0** |
| Water activity [-] | **0.22** |

### EXAMPLE 29:

| Sample **01** | [%] |
|---|---|
| Chocolate liquor: sucrose (50:50) | **17.1** |
| Anhydrous milk fat | **3.9** |
| NFMP | **13.1** |
| Sucrose | **19.7** |
| Lecithin | **0.4** |
| fruit powder raspberry | **5.3** |
| Moisture | **40.5** |
| Total | **100.0** |

### EXAMPLE 30:

| Sample **02** | [%] |
|---|---|
| Chocolate liquor: sucrose (50:50) | **18.6** |
| Anhydrous milk fat | **4.3** |
| NFMP | **14.3** |
| Sucrose | **21.5** |
| Lecithin | **0.4** |
| fruit powder raspberry | **5.7** |
| Moisture | **35.1** |
| Total | **100.0** |
| Water activity [-] | **0.9** |

### EXAMPLE 31:

| Sample **03** | [%] |
|---|---|
| Chocolate liquor: sucrose (50:50) | **19.5** |
| Anhydrous milk fat | **4.5** |
| NFMP | **15.0** |
| Sucrose | **22.5** |
| Lecithin | **0.5** |
| fruit powder raspberry | **6.0** |
| Moisture | **31.9** |
| Total | **100.0** |
| Water activity [-] | **0.87** |

### EXAMPLE 32:

| Sample **04** | [%] |
|---|---|
| Chocolate liquor: sucrose (50:50) | **22.0** |
| Anhydrous milk fat | **5.1** |
| NFMP | **16.9** |
| Sucrose | **25.3** |
| Lecithin | **0.5** |
| fruit powder raspberry | **6.8** |
| Moisture | **23.5** |
| Total | **100.0** |
| Water activity [-] | **0.81** |

### EXAMPLE 33:

| Sample **05** | [%] |
|---|---|
| Chocolate liquor: sucrose (50:50) | **23.4** |
| Anhydrous milk fat | **5.4** |
| NFMP | **18.0** |
| Sucrose | **27.1** |
| Lecithin | **0.5** |
| fruit powder raspberry | **7.2** |
| Moisture | **18.3** |
| Total | **100.0** |
| Water activity [-] | **0.72** |

### EXAMPLE 34:

| Sample **06** | [%] |
|---|---|
| Chocolate liquor: sucrose (50:50) | **25.0** |
| Anhydrous milk fat | **5.8** |
| NFMP | **19.2** |
| Sucrose | **28.8** |
| Lecithin | **0.6** |
| fruit powder raspberry | **7.7** |
| Moisture | **13.0** |
| Total | **100.0** |
| Water activity [-] | **0.62** |

Examples 14-34 above list either the "initial" moisture content of water activity level, or the moisture content or water activity after drying for a time period (for example, Sample 01 to 06) as noted above. By varying the length of the drying period, one can prepare a product with a desired water activity level and having the desired physical characteristics and/or microbiological stability. As shown in the examples above, water activity levels can be reduced below 0.3, and even as low as 0.2, which will produce a crispy final product. Shorter drying periods can result in water activity of 0.9 or 0.85 or below. Clearly, one of skill in the art can use the oil-in-water suspensions of the invention in combination with a process to reduce water activity to produce a variety of final products or compositions having one of more desired characteristics, textures, or microbiological stability profiles.

The examples presented above and the contents of the application define and describe examples of the many food ingredients and products that can be produced according to the invention. None of the examples and no part of the description should be taken as a limitation on the scope of the invention as a whole or of the meaning of the following claims.

## Claims

1. A chocolate food product or ingredient having in an oil-in-water suspension comprising a gelatinized network structure capable of stabilizing the suspension formed by soluble cocoa starches or polysaccharides and proteins present in the cocoa solids, and crystallized cocoa butter as a dispersed component, the oil or fat phase comprising at least 2% cocoa butter, the cocoa butter at least partially crystallized at room temperature, and the aqueous phase consisting-of at least 4% non-fat cocoa solids, wherein the soluble starches or polysaccharides and proteins present in the cocoa solids are formed into a gelatinized network in the suspension structure, and the insoluble particles from at least the cocoa solids are dispersed in the suspension.

2. The food product or ingredient according to claim 1, having at least one emulsifier.

3. The food product or ingredient according to claim 2, wherein at least one emulsifier is a lecithin.

4. The food product or ingredient according to claim 1, wherein the cocoa solids content is supplied as cocoa powder.

5. The food product or ingredient according to claim 1, wherein the cocoa butter or cocoa solids content is supplied as a processed chocolate product.

6. The food product or ingredient according to claim 1, having at least 15% total cocoa solids.

7. The food product or ingredient according to claim 1, having at least 35% total cocoa solids.

8. The food product or ingredient according to claim 1, wherein the cocoa butter content is between 5% and 10%.

9. The food product or ingredient according to claim 1, wherein the cocoa butter content is above 10%.

10. The food product or ingredient according to claim 1, wherein the cocoa butter content is at least 18%.

11. The food product or ingredient according to claim 1, further comprising at least 5% milk solids.

12. The food product or ingredient according to claim 1, further comprising at least 12% total milk solids.

13. The food product or ingredient according to claim 1, having at least 5% nutritive carbohydrate sweeteners.

14. The food product or ingredient according to claim 1, having one or more of an artificial sweetener, xylitol, erythritol, mannitol, sorbitol, lactitol, isomaltulose, or maltitol.

15. The food product or ingredient according to claim 1, having one or more vitamin or mineral food additives.

16. The food product or ingredient according to claim 1, wherein the chocolate liquor or cocoa solids present have an enhanced or increased level of anti-oxidants or polyphenols.

17. The food product or ingredient according to claim 1, further comprising one or more of: concentrated milk, evaporated milk, sweetened condensed milk, dried milk, skim milk, concentrated skim milk, evaporated skim milk, sweetened condensed skim milk, cocoa powder, heavy cream, vanillin, whey protein, anhydrous milk fat, non fat dry milk protein, whole milk powder, soy milk, soy milk protein, lecithin, and sugar.

18. The food product or ingredient according to claim 1, wherein the food ingredient is further processed into a product containing dark chocolate, milk chocolate, bittersweet chocolate, semisweet chocolate, or white chocolate.

19. The food product or ingredient according to claim 18 processed into a semisweet chocolate or milk chocolate containing product.

20. The food product or ingredient according to claim 1, processed into a reduced or low calorie or sugar free product.

21. The food product or ingredient according to claim 1, processed into a chocolate pudding product.

22. The food product or ingredient according to claim 1, processed into a cocoa-containing beverage.

23. The food product or ingredient according to claim 22, wherein the aqueous phase further comprises a milk product.

24. The food product or ingredient according to claim 23, wherein the milk product is selected from whole milk, skim milk, 2% fat milk, or cream.

25. The food product or ingredient according to claim 24, further comprising one or more sweeteners.

26. The food product or ingredient according to claim 22, wherein cocoa butter droplets present in suspension at room temperature are in the range of between 0.5-30 um.

27. The food product or ingredient according to claim 1, having a water activity level of 0.9 or below.

28. The food product or ingredient according to claim 27, having a water activity of less than 0.85.

29. The food product or ingredient according to any of the claims 27-28, having a water activity of less than 0.65.

30. The food product or ingredient according to any of the claims 27-29, having a water activity of less than 0.55.

31. The food product or ingredient according to any of the claims 27-30, having a water activity of less than 0.45.

32. The food product or ingredient according to any of the claims 27-31, having a water activity of less than 0.35.

33. The food product or ingredient according to any of the claims 27, further comprising one or more of nuts, peanuts, almonds, peanut butter, caramel, and edible inclusions.

34. A method of making a food product or ingredient as defined in claim 1, comprising: providing a fat or oil phase comprising at least 2% cocoa butter, the cocoa butter at least partially crystallized at room temperature; providing an aqueous or continuous phase comprising water and at least 4% non fat cocoa solids; mixing the oil or fat phase with the aqueous or continuous phase at a temperature above the melting point of the cocoa butter; and treating or heating the mixed phases under conditions where the soluble starches or polysaccharides and protein components of the cocoa solids produce a gelatinized network structure in the suspension, and the crystallized cocoa butter particles and the insoluble particles from at least the cocoa solids are dispersed in the suspension.

35. The method according to claim 34, wherein the fat or oil phase further comprises an additional fat component with a melting point at or above 25° C.

36. The method according to claim 34, wherein further protein and starch components of the gel network are added through the addition of one or more of: hydrocolloid; polysaccharide; and milk protein; vegetable protein; fruit protein; starch; or polysaccharide.

37. The method according to claim 34, wherein an emulsifier is present.

38. The method according to claim 34, further comprising adding food grade gas by aerating or whipping.

39. The method according to claim 34, wherein one or more vitamin or mineral food additives are present in the aqueous or continuous phase.

40. The method according to claim 34, further comprising removing substantially all of the insoluble particles.

41. The method according to claim 34, wherein treating or heating the mixed phases comprises heating the mixed phases to 121 ° C for 8.5 minutes.

42. The method according to claim 34, wherein treating or heating the mixed phases comprises heating the mixed phases to 150° C for at least 4 seconds.

43. The method according to claim 34, wherein treating or heating the mixed phases comprises heating the mixed phases to 68° C.

44. The method according to claim 34, wherein treating or heating the mixed phases comprises allowing the mixture to rest at room temperature for a period of time sufficient to form a gelatinized network structure.

45. The method according to claim 34, wherein mixing the oil or fat phase with the aqueous or continuous phase comprises mixing with a static mixer, a homogenizer, or dynamic mixer.

46. The method according to claim 34, wherein the food ingredient is further processed into a product containing dark chocolate, milk chocolate, bittersweet chocolate, semisweet chocolate, or white chocolate.

47. The method according to claim 34, further comprising adding one or more of chocolate liquor, cocoa powder, heavy cream, anhydrous milk fat, whey protein concentrates, non-fat milk protein, soy milk, whole milk powder, sugar, lecithin, vanillin, and skim milk to one or both of the fat or oil phase or the aqueous of continuous phase.

48. The method according to claim 34, wherein the cocoa butter content is at least 18% in the final suspension.

49. The method according to claim 34, wherein the cocoa butter content is at least 15% in the final suspension.

50. The method according to claim 34, wherein the cocoa butter content is at least 20% in the final suspension.

51. The method according to claim 34, wherein cocoa and milk products are added to produce a final suspension comprising at least 10% cocoa liquor and 12% total milk solids.

52. The method according to claim 34, wherein cocoa products and milk products are added to produce a final suspension comprising at least 25% total cocoa solids, including at least 2.5% fat-free cocoa solids, and further comprising 12% or more milk solids and 2.5% or more milk fat.

53. The method according to claim 34, further comprising adding milk products to produce a final suspension having at least 14% milk solids including 2.5% or more milk fat.

54. The method according to claim 34, wherein cocoa products are added to produce a final suspension having at least 35% total cocoa solids.

55. The method according to claim 34, wherein some or all of the cocoa product or cocoa solids present contain an enhanced or increased level of anti-oxidants or polyphenols.

56. The method according to claim 34 which further comprises the step of drying to reduce the water activity level to 0.9 or below.

57. The method according to claim 34, wherein the aqueous phase comprises water, a sugar or sweetener or both, and one or more cocoa products to provide at least 4% non-fat cocoa solids and containing cocoa proteins, cocoa starches, or cell wall materials.

58. The method according to claim 57, wherein skim milk is present in the aqueous phase.

59. The method according to claim 57, wherein condensed milk, evaporate milk, whole milk, soy milk, or whole milk powder is present in the aqueous phase.

60. The method according to claim 57, wherein the viscosity increase is at least double the measurable 30 sec⁻¹ shear rate.

61. The method according to claim 57, wherein mixing results in cocoa butter droplets in the suspension at room temperature in the range of between 0.5-100 um.

62. The method according to claim 57, wherein the mixing results in cocoa butter droplets in the suspension at room temperature in the range of between 0.5-30 um.

63. The method according to claim 57, wherein the mixing results in insoluble cocoa particles in the suspension at room temperature in the range of between 0.5-100 um.

64. The method according to claim 57, wherein the mixing results in insoluble cocoa particles in the suspension at room temperature in the range of between 0.5-30 um.

65. The method according to claim 57 further comprising adding edible particles 0.5 mm or greater in diameter.

66. The method according to claim 57, further comprising adding one or more of: nuts, ground nuts, crisp edible inclusions, fruit particles, and solid or liquid filling.

## Patentansprüche

1. Schokoladeprodukt oder Schokoladebestandteil enthaltend eine Öl-in-Wasser Suspension umfassend eine gelierte Netzstruktur die imstande ist, die Suspension zu stabilisieren, die durch die in der Kakaotrockenmasse vorhandenen löslichen Kakaostärke oder Polysaccharide und Proteine gebildet wird, und kristallisierte Kakaobutter als dispergierter Bestandteil, wobei die Öl- bzw. Fettphase mindestens 2% Kakaobutter enthält, wobei die Kakaobutter bei Raumtemperatur mindestens teilweise kristallisiert, und die wässrige Phase mindestens aus 4% nicht fettiger Kakaotrockenmasse besteht, wobei die in der Kakaotrockenmasse vorhandenen löslichen Stärke oder Polysaccharide und Proteine innerhalb der Suspensionstruktur zu einem gelierten Netzwerk ausgebildet werden, und die nicht löslichen Partikeln von mindestens der Kakaotrockenmasse in der Suspension dispergiert werden.

2. Produkt oder Bestandteil nach Anspruch 1, umfassend mindestens einen Emulgator.

3. Produkt oder Bestandteil nach Anspruch 2, wobei mindestens einen Emulgator Lecithin ist.

4. Produkt oder Bestandteil nach Anspruch 1, wobei der Kakaotrockenmassegehalt als Kakaopulver bereitgestellt wird.

5. Produkt oder Bestandteil nach Anspruch 1, wobei die Kakaobutter oder die Kakaotrockenmasse als industriell verarbeitetes Schokoladenprodukt bereitgestellt wird.

6. Produkt oder Bestandteil nach Anspruch 1, enthaltend mindestens 15% gesamte Kakaotrockenmasse.

7. Produkt oder Bestandteil nach Anspruch 1, enthaltend mindestens 35% gesamte Kakaotrockenmasse.

8. Produkt oder Bestandteil nach Anspruch 1, wobei der Gehalt an Kakaobutter bei zwischen 5% und 10% liegt.

9. Produkt oder Bestandteil nach Anspruch 1, wobei der Gehalt an Kakaobutter höher als 10% ist.

10. Produkt oder Bestandteil nach Anspruch 1, wobei der Gehalt an Kakaobutter mindestens 18% beträgt.

11. Produkt oder Bestandteil nach Anspruch 1, weiterhin umfassend mindestens 5% Milchtrockenmasse.

12. Produkt oder Bestandteil nach Anspruch 1, weiterhin umfassend mindestens 12% gesamte Milchtrockenmasse.

13. Produkt oder Bestandteil nach Anspruch 1 umfassend mindestens 5% nahrhafte Süßstoffe, die auf Kohlenhydraten basiert sind.

14. Produkt oder Bestandteil nach Anspruch 1 enthaltend einen künstlichen Süßstoff, Xylitol, Erythritol, Mannitol, Sorbitol, Lactitol, Isomaltulose, oder Maltitol, oder mehrere davon.

15. Produkt oder Bestandteil nach Anspruch 1 enthaltend einen vitamin- oder mineralhaltigen Lebensmittelzusatz oder mehrere davon.

16. Produkt oder Bestandteil nach Anspruch 1, wobei die Kakaomasse oder Kakaotrockenmasse einen besseren oder höheren Gehalt an Antioxidationsmitteln oder Polyphenolen hat.

17. Produkt oder Bestandteil nach Anspruch 1, weiterhin umfassend einen oder mehrere von: Kondensmilch, evaporierter Milch, gezuckerter Kondensmilch, Trockenmilch, entrahmter Milch, angereichter entrahmter Milch, evaporierter entrahmter Milch, gezuckerter entrahmter Kondensmilch, Kakaopulver, Schlagsahne, Vanillin, Molkenprotein, anhydrischem Milchfett, fettfreiem trockenem Milchprotein, Vollmilchpulver, Sojamilch, Sojamilchprotein, Lecithin und Zucker.

18. Produkt oder Bestandteil nach Anspruch 1, wobei der Bestandteil weiterhin zu einem Bitterschokolade-, Milchschokolade-, Feinherbschokolade-, Halbherbschokolade- oder Weißschokoladeprodukt verarbeitet wird.

19. Produkt oder Bestandteil nach Anspruch 18, das oder der zu einem Halbherbschokolade- oder zu einem Milchschokoladeprodukt verarbeitet wird.

20. Produkt oder Bestandteil nach Anspruch 1, das oder der zu einem kalorienreduzierten oder kalorienarmen oder zuckerfreien Produkt verarbeitet wird.

21. Produkt oder Bestandteil nach Anspruch 1, das oder der zu einem Schokopudding verarbeitet wird.

22. Produkt oder Bestandteil nach Anspruch 1, das oder der zu einem kakaohaltigen Getränk verarbeitet wird.

23. Produkt oder Bestandteil nach Anspruch 22, wobei die wässrige Phase weiterhin ein Milchprodukt umfasst.

24. Produkt oder Bestandteil nach Anspruch 23, wobei das Milchprodukt ausgewählt aus Vollmilch, entrahmter Milch, Milch 2 % Fett, oder Sahne ist.

25. Produkt oder Bestandteil nach Anspruch 24, weiterhin umfassend einen oder mehrere Süßstoffe.

26. Produkt oder Bestandteil nach Anspruch 22, wobei die Kakaobuttertröpfchen in der Suspension bei Raumtemperatur in einem Größenbereich von zwischen 0,5-30 µm vorhanden sind.

27. Produkt oder Bestandteil nach Anspruch 1 aufweisend eine Wasseraktivität von 0,9 oder niedriger.

28. Produkt oder Bestandteil nach Anspruch 27 aufweisend eine Wasseraktivität niedriger als 0,85.

29. Produkt oder Bestandteil nach einem der Ansprüche 27-28 aufweisend eine Wasseraktivität niedriger als 0,65.

30. Produkt oder Bestandteil nach einem der Ansprüche 27-29 aufweisend eine Wasseraktivität niedriger als 0,55.

31. Produkt oder Bestandteil nach einem der Ansprüche 27-30 aufweisend eine Wasseraktivität niedriger als 0,45.

32. Produkt oder Bestandteil nach einem der Ansprüche 27-31 aufweisend eine Wasseraktivität niedriger als 0,35.

33. Produkt oder Bestandteil nach einem der Ansprüche 27, weiterhin umfassend einen oder mehrere von: Nüssen, Erdnüssen, Mandeln, Erdnussbutter, Karamell, und essbaren Einschlüssen.

34. Verfahren zur Herstellung eines Produkts oder Bestandteils nach Anspruch 1 umfassend: das Bereitstellen einer Fett- bzw. Ölphase umfassend mindestens 2% Kakaobutter, wobei die Kakaobutter bei Raumtemperatur mindestens teilweise kristallisiert; das Bereitstellen einer wässrigen oder kontinuierlichen Phase umfassend Wasser und mindestens 4% fettfreie Kakaotrockenmasse; die Beimischung der Öl- bzw. Fettphase mit der wässrigen bzw. kontinuierlichen Phase bei Raumtemperatur oberhalb der Schmelztemperatur der Kakaobutter; und Behandlung oder Erwärmung der beigemischten Phasen unter Bedingungen, bei denen die löslichen Stärken oder Polysaccharide und Proteine der Kakaotrockenmasse eine gelierte Netzstruktur innerhalb der Suspension erzeugen, und die kristallisierten Partikeln der Kakaobutter und die löslichen Partikel von mindestens der Kakaotrockenmasse dispergiert innerhalb der Suspension werden.

35. Verfahren nach Anspruch 34, wobei die Fett- bzw. Ölphase weiterhin einen weiteren Fettbestandteil umfasst, der eine Schmelztemperatur von 25 °C oder höher aufweist.

36. Verfahren nach Anspruch 34, wobei weitere Protein- und Stärkebestandteile des Gelnetzwerks beigemischt werden, indem einer oder mehrere der folgenden Zutaten beigemischt werden: Hydrocolloid, Polysaccharide, Milchprotein, Pflanzenprotein, Fruchtprotein, Stärke, oder Polysaccharide.

37. Verfahren nach Anspruch 34, wobei ein Emulgator vorhanden ist.

38. Verfahren nach Anspruch 34, weiterhin umfassend die Beimischung von lebensmittelverträglichem Gas durch Luftzufuhr oder Schlagen.

39. Verfahren nach Anspruch 34, wobei ein oder mehrere vitamin- oder mineralhaltige Lebensmittelzusätze innerhalb der wässrigen bzw. kontinuierlichen Phase vorhanden sind.

40. Verfahren nach Anspruch 34, weiterhin umfassend das Entfernen von im Wesentlichen allen unlöslichen Partikeln.

41. Verfahren nach Anspruch 34, wobei bei der Behandlung oder Erwärmung der gemischten Phasen die gemischten Phasen auf 121 °C für 8,5 Minuten erwärmt werden.

42. Verfahren nach Anspruch 34, wobei bei der Behandlung oder Erwärmung der gemischten Phasen die gemischten Phasen auf 150 °C für mindestens 4 Sekunden erwärmt werden.

43. Verfahren nach Anspruch 34, wobei bei der Behandlung oder Erwärmung der gemischten Phasen die gemischten Phasen auf 68 °C erwärmt werden.

44. Verfahren nach Anspruch 34, wobei bei der Behandlung oder Erwärmung der gemischten Phasen die Mischung bei Raumtemperatur für eine Zeit ruhen gelassen wird, die ausreicht, um eine gelierte Netzstruktur zu bilden.

45. Verfahren nach Anspruch 34, wobei die Beimischung der Fett- bzw. Ölphase mit der wässrigen bzw. kontinuierlichen Phase die Beimischung mithilfe von einem Statikmischer, einem Homogenisator, oder einem dynamischen Mischer einbezieht.

46. Verfahren nach Anspruch 34, wobei das Produkt weiterhin zu einem Bitterschokolade-, Milchschokolade-, Feinherbschokolade-, Halbherbschokolade-, oder Weißschokoladeprodukt verarbeitet wird.

47. Verfahren nach Anspruch 34, weiterhin umfassend die Beimischung von einem oder mehreren von Kakaomasse, Kakaopulver, Schlagsahne, anhydrischem Milchfett, Molkenproteinkonzentraten, fettfreiem Milchprotein, Sojaprotein, Vollmilchpulver, Zucker, Lecithin, Vanillin und entrahmter Milch mit der Fett- bzw. Ölphase, mit der wässrigen bzw. kontinuierlichen Phase oder mit beiden.

48. Verfahren nach Anspruch 34, wobei der Gehalt an Kakaobutter mindestens 18% in der Endsuspension beträgt.

49. Verfahren nach Anspruch 34, wobei der Gehalt an Kakaobutter mindestens 15% in der Endsuspension beträgt.

50. Verfahren nach Anspruch 34, wobei der Gehalt an Kakaobutter mindestens 20% in der Endsuspension beträgt.

51. Verfahren nach Anspruch 34, wobei die Kakao- und Milchprodukte beigemischt werden, um eine Endsuspension umfassend mindestens 10% Kakaomasse und 12% gesamte Milchtrockenmasse zu erzeugen.

52. Verfahren nach Anspruch 34, wobei die Kakao- und Milchprodukte beigemischt werden, um eine Endsuspension umfassend mindestens 25% gesamte Kakaotrockenmasse, einschließlich mindestens 2,5% fettfreier Kakaotrockenmasse, und weiterhin umfassend 12% oder mehr an Milchtrockenmasse und 2,5% oder mehr an Milchfett zu erzeugen.

53. Verfahren nach Anspruch 34, weiterhin umfassend die Beimischung von Milchprodukten um eine Endsuspension umfassend mindestens 14% Kakaotrockenmasse, einschließlich 2,5% Milchfett, oder mehr zu erzeugen.

54. Verfahren nach Anspruch 34, wobei die Kakaoprodukte beigemischt werden, um eine Endsuspension mit einem Gehalt von mindestens 35% gesamte Kakaotrockenmasse zu erzeugen.

55. Verfahren nach Anspruch 34, wobei etliche oder alle Kakaoprodukten oder die Kakaotrockenmasse einen besseren oder höheren Gehalt an Antioxidationsmitteln oder Polyphenolen enthalten.

56. Verfahren nach Anspruch 34, weiterhin umfassend den Schritt, bei dem es getrocknet wird, um die Wasseraktivität auf 0,9 oder darunter zu senken.

57. Verfahren nach Anspruch 34, wobei die wässrige Phase Wasser, Zucker bzw. einen Süßstoff, oder beide, und ein oder mehere Kakaoprodukte umfasst, damit mindestens 4% fettfreie Kakaotrockenmasse vorhanden ist und sie Kakaoproteine, Kakaostärke, oder Zellwandmaterialien enthält.

58. Verfahren nach Anspruch 57, wobei innerhalb der wässrigen Phase entrahmte Milch vorhanden ist.

59. Verfahren nach Anspruch 57, wobei innerhalb der wässrigen Phase Kondensmilch, evaporierte Milch, Sojamilch, oder Vollmilchpulver vorhanden ist.

60. Verfahren nach Anspruch 57, wobei die Viskositätserhöhung mindestens doppelt so hoch wie die messbare 30 sek⁻¹ Schergeschwindigkeit ist.

61. Verfahren nach Anspruch 57, wobei die Beimischung bei Raumtemperatur zur Bildung von Kakaobuttetröpfchen im Größenbereich von zwischen 0,5-100 µm innerhalb der Suspension führt.

62. Verfahren nach Anspruch 57, wobei die Beimischung bei Raumtemperatur zur Bildung von Kakaobuttetröpfchen im Größenbereich von zwischen 0,5-30 µm innerhalb der Suspension führt.

63. Verfahren nach Anspruch 57, wobei die Beimischung bei Raumtemperatur zur Bildung von unlösslichen Kakaopartikeln im Größenbereich von zwischen 0,5-100 µm innerhalb der Suspension führt.

64. Verfahren nach Anspruch 57, wobei die Beimischung bei Raumtemperatur zur Bildung von unlösslichen Kakaopartikeln im Größenbereich von zwischen 0,5-30 µm innerhalb der Suspension führt.

65. Verfahren nach Anspruch 57, weiterhin umfassend die Beimischung von essbaren Partikeln mit einem Durchmesser von 0,5 mm oder größer.

66. Verfahren nach Anspruch 57, weiterhin umfassend die Beimischung von einem oder mehreren von: Nüssen, gemahlten Nüssen, knusprigen essbaren Einschlüssen, Fruchtpartikeln, und fester oder flüssiger Füllung.

## Revendications

1. Produit ou ingrédient alimentaire à base de chocolat ayant une suspension huile-dans-eau comprenant une structure de réseau gélatinisée capable de stabiliser la suspension formée par des amidons de cacao ou des polysaccharides et des protéines solubles présents dans la matière sèche de cacao, et cristalliser le beurre de cacao en tant qu'un composant dispersé, comprenant la phase huileuse ou grasse au moins 2% de beurre de cacao, étant le beurre de cacao au moins partiellement cristallisé à température ambiante, et la phase aqueuse comprenant au moins 4% de matière sèche de cacao non grasse, dans lequel les amidons ou polysaccharides et protéines solubles sont façonnés pour former une structure de réseau gélatinisée dans la structure de la suspension et les particules insolubles d'au moins la matière sèche de cacao sont dispersées dans la suspension.

2. Produit ou ingrédient alimentaire selon la revendication 1, ayant au moins un émulsifiant.

3. Produit ou ingrédient alimentaire selon la revendication 2, dans lequel au moins un émulsifiant est la lécithine.

4. Produit ou ingrédient alimentaire selon la revendication 1, dans lequel la teneur en matière sèche de cacao est donnée en tant que poudre de cacao.

5. Produit ou ingrédient alimentaire selon la revendication 1, dans lequel la teneur en beurre de cacao ou matière sèche de cacao est donnée en tant qu'un produit à base de chocolat transformé.

6. Produit ou ingrédient alimentaire selon la revendication 1, ayant au moins 15% de matière sèche de cacao totale.

7. Produit ou ingrédient alimentaire selon la revendication 1, ayant au moins 35% de matière sèche de cacao totale.

8. Produit ou ingrédient alimentaire selon la revendication 1, dans lequel la teneur en beurre de cacao est comprise entre 5% et 10%.

9. Produit ou ingrédient alimentaire selon la revendication 1, dans lequel la teneur en beurre de cacao est supérieure à 10%.

10. Produit ou ingrédient alimentaire selon la revendication 1, dans lequel la teneur en beurre de cacao est au moins 18%.

11. Produit ou ingrédient alimentaire selon la revendication 1, comprenant en outre au moins 5% de matière sèche de lait.

12. Produit ou ingrédient alimentaire selon la revendication 1, comprenant en outre au moins 12% de matière sèche de lait totale.

13. Produit ou ingrédient alimentaire selon la revendication 1, ayant au moins 5% d'édulcorantes à base d'hydrates de carbone nutritifs.

14. Produit ou ingrédient alimentaire selon la revendication 1, ayant un ou plusieurs des suivants: un édulcorant artificiel, du xylitol, de l'érythritol, du mannitol, du sorbitol, du lactitol, de l'isomaltulose, ou du maltitol.

15. Produit ou ingrédient alimentaire selon la revendication 1, ayant un ou plusieurs additives alimentaires à base de vitamines ou de minéraux.

16. Produit ou ingrédient alimentaire selon la revendication 1, dans lequel le liqueur de chocolat ou matière sèche de cacao présents ont un niveau amélioré ou augmenté d'antioxydants ou de polyphénols.

17. Produit ou ingrédient alimentaire selon la revendication 1, comprenant en outre un ou plusieurs des suivants: du lait concentré, du lait évaporé, du lait condensé édulcoré, du lait séché, du lait écrémé, du lait écrémé concentré, du lait écrémé évaporé, du lait écrémé condensé édulcoré, de la poudre de cacao, de la crème fraîche épaisse, de la vanilline, de la protéine de lactosérum, de la matière grasse laitière anhydre, de la protéine du lait sec non gras, de la poudre du lait entier, du lait de soja, de la lécithine, et du sucre.

18. Produit ou ingrédient alimentaire selon la revendication 1, dans lequel l'ingrédient alimentaire est transformé en outre en un produit contenant du chocolat noir, du chocolat au lait, du chocolat amer-doux, du chocolat demi-doux, ou du chocolat blanc.

19. Produit ou ingrédient alimentaire selon la revendication 18, transformé en un produit contenant du chocolat demi-doux ou du chocolat au lait.

20. Produit ou ingrédient alimentaire selon la revendication 1, transformé en un produit à teneur réduite ou faible en calories ou sans sucre.

21. Produit ou ingrédient alimentaire selon la revendication 1, transformé en un produit de pudding au chocolat.

22. Produit ou ingrédient alimentaire selon la revendication 1, transformé en une boisson contenant du cacao.

23. Produit ou ingrédient alimentaire selon la revendication 22, dans lequel la phase aqueuse comprend en outre un produit laitier.

24. Produit ou ingrédient alimentaire selon la revendication 23, dans lequel le produit laitier est choisi du lait entier, du lait écrémé, du lait à 2% de matière grasse, ou de la crème.

25. Produit ou ingrédient alimentaire selon la revendication 24, comprenant en outre un ou plusieurs édulcorants.

26. Produit ou ingrédient alimentaire selon la revendication 22, dans lequel les gouttelettes de beurre de cacao présentes dans la suspension à température ambiante se trouvent dans l'intervalle compris entre 0,5-30 µm.

27. Produit ou ingrédient alimentaire selon la revendication 1, ayant un niveau d'activité d'eau de 0,9 ou inférieur.

28. Produit ou ingrédient alimentaire selon la revendication 27, ayant un niveau d'activité d'eau inférieur à 0,85.

29. Produit ou ingrédient alimentaire selon l'une quelconque des revendications 27-28, ayant une activité d'eau inférieure à 0,65.

30. Produit ou ingrédient alimentaire selon l'une quelconque des revendications 27-29, ayant une activité d'eau inférieure à 0,55.

31. Produit ou ingrédient alimentaire selon l'une quelconque des revendications 27-30, ayant une activité d'eau inférieure à 0,45.

32. Produit ou ingrédient alimentaire selon l'une quelconque des revendications 27-31, ayant une activité d'eau inférieure à 0,35.

33. Produit ou ingrédient alimentaire selon l'une quelconque des revendications 27, comprenant en outre un ou plusieurs des suivants: des noisettes, des cacahouètes, des amandes, du beurre de cacahouète, du caramel, et des inclusions comestibles.

34. Procédé de fabrication d'un produit ou ingrédient alimentaire selon la revendication 1, comprenant: ajouter de la matière grasse ou de l'huile comprenant au moins 2% de beurre de cacao, le beurre de cacao au moins partiellement cristallisé à température ambiante; ajouter une phase aqueuse ou continue comprenant de l'eau et au moins 4% de matière sèche de cacao non grasse; mélanger la phase huileuse ou grasse avec la phase aqueuse ou continue à une température supérieure à la température de fusion du beurre de cacao; et traiter ou échauffer les phases mélangées sous des conditions dans lesquels les amidons ou polysaccharides solubles et les composants de protéine de la matière sèche de cacao produisent une structure de réseau gélatinisée dans la suspension, et les particules de beurre de cacao cristallisées et les particules insolubles d'au moins la matière sèche du cacao sont dispersées dans la suspension.

35. Procédé selon la revendication 34, dans lequel la phase grasse ou huileuse comprend en outre un composant gras additionnel ayant une température de fusion de 25 °C ou supérieure.

36. Procédé selon la revendication 34, dans lequel d'autres composants de protéine de l'amidon de la structure du réseau de gel sont ajoutés par addition d'un ou plusieurs des suivants: un hydrocolloïde, un polysaccharide, de la protéine du lait, de la protéine végétale, de la protéine des fruits, de l'amidon, ou d'un polysaccharide.

37. Procédé selon la revendication 34, dans lequel un émulsifiant est présente.

38. Procédé selon la revendication 34, comprenant en outre l'addition de gaz de qualité alimentaire par aération ou fouettement.

39. Procédé selon la revendication 34, dans lequel un ou plusieurs additives alimentaires à base de vitamines ou minéraux sont présentes dans la phase aqueuse ou continue.

40. Procédé selon la revendication 34, comprenant en outre retirer essentiellement toutes les particules insolubles.

41. Procédé selon la revendication 34, dans lequel traiter ou échauffer les phases mélangées comprend échauffer les phases mélangées à 121 °C pendant 8,5 minutes.

42. Procédé selon la revendication 34, dans lequel traiter ou échauffer les phases mélangées comprend échauffer les phases mélangées à 150 °C pendant au moins 4 secondes.

43. Procédé selon la revendication 34, dans lequel traiter ou échauffer les phases mélangées comprend échauffer les phases mélangées à 68 °C.

44. Procédé selon la revendication 34, dans lequel traiter ou échauffer les phases mélangées comprend laisser reposer le mélange à température ambiante pendant une période de temps suffisante pour former une structure de réseau gélatinisée.

45. Procédé selon la revendication 34, dans lequel l'action de mélanger la phase huileuse ou grasse avec la phase aqueuse ou continue comprend mélanger avec un mélangeur statique, un homogénéisateur, ou un mélangeur dynamique.

46. Procédé selon la revendication 34, dans lequel l'ingrédient alimentaire est transformé en outre en un produit contenant du chocolat noir, du chocolat au lait, du chocolat amer-doux, du chocolat demi-doux, ou du chocolat blanc.

47. Procédé selon la revendication 34, comprenant en outre l'addition à la phase grasse ou huileuse, à la phase aqueuse ou continue, ou à toutes deux phases d'un ou plusieurs des suivants : du liqueur de chocolat, de la poudre de cacao, de la crème fraîche épaisse, de la grasse du lait anhydre, des produits concentrés de protéine de lactosérum, de la protéine du lait non gras, du lait de soja, de la poudre de lait entier, du sucre, de la lécithine, de la vanilline, et du lait écrémé.

48. Procédé selon la revendication 34, dans lequel la teneur en beurre de cacao est au moins 18% dans la suspension finale.

49. Procédé selon la revendication 34, dans lequel la teneur en beurre de cacao est au moins 15% dans la suspension finale.

50. Procédé selon la revendication 34, dans lequel la teneur en beurre de cacao est au moins 20% dans la suspension finale.

51. Procédé selon la revendication 34, dans lequel des produits de cacao et de lait sont ajoutés afin d'obtenir une suspension finale d'au moins 10% de liqueur de cacao et 12% de matière sèche de lait totale.

52. Procédé selon la revendication 34, dans lequel des produits de cacao et de lait sont ajoutés afin d'obtenir une suspension finale comprenant au moins 25% de matière sèche de cacao totale, comprenant au moins 2,5% de matière sèche de cacao non grasse, et comprenant en outre 12% ou une quantité supérieure de matière sèche de lait et 2,5% ou une quantité supérieure de grasse de lait.

53. Procédé selon la revendication 34, comprenant en outre l'addition de produits laitiers afin d'obtenir une suspension finale ayant au moins 14% de matière sèche de lait et comprenant 2,5% ou une quantité supérieure de grasse de lait.

54. Procédé selon la revendication 34, dans lequel les produits de cacao sont ajoutés afin d'obtenir une suspension finale ayant au moins 35% de matière sèche de cacao totale.

55. Procédé selon la revendication 34, dans lequel plusieurs ou tous les produits de cacao ou de la matière sèche de cacao présents ont un niveau amélioré ou augmenté d'antioxydants ou de polyphénols.

56. Procédé selon la revendication 34, comprenant en outre l'étape de sécher afin de réduire le niveau d'activité d'eau à 0,9 ou à un niveau inférieur.

57. Procédé selon la revendication 34, dans lequel la phase aqueuse comprend de l'eau, du sucre ou un édulcorant, ou l'un et l'autre, et un ou plusieurs produits de cacao afin d'obtenir au moins 4% de matière sèche de cacao non grasse et contenant des protéines de cacao, des amidons de cacao, ou des matériaux de la paroi cellulaire.

58. Procédé selon la revendication 57, dans lequel dans la phase aqueuse il y a du lait écrémé.

59. Procédé selon la revendication 57, dans lequel dans la phase aqueuse il y a du lait condensé, du lait évaporé, du lait entier, du lait de soja, ou de la poudre de lait entier.

60. Procédé selon la revendication 57, dans lequel l'augmentation de la viscosité est au moins du double de la vitesse de cisaillement 30 sec⁻¹ mesurable.

61. Procédé selon la revendication 57, dans lequel l'action de mélanger produit des gouttelettes de beurre de cacao dans la suspension à température ambiante dans l'intervalle compris entre 0,5-100 µm.

62. Procédé selon la revendication 57, dans lequel l'action de mélanger produit des gouttelettes de beurre de cacao présentes dans la suspension à température ambiante dans l'intervalle compris entre 0,5-30 µm.

63. Procédé selon la revendication 57, dans lequel l'action de mélanger produit des particules de cacao insolubles présentes dans la suspension à température ambiante dans l'intervalle compris entre 0,5-100 µm.

64. Procédé selon la revendication 57, dans lequel l'action de mélanger produit des particules de cacao insolubles présentes dans la suspension à température ambiante dans l'intervalle compris entre 0,5-30 µm.

65. Procédé selon la revendication 57, comprenant en outre l'addition de particules comestibles de 0,5 mm ou ayant un diamètre plus grande.

66. Procédé selon la revendication 57, comprenant en outre l'addition d'un ou plusieurs des suivants: des noisettes, des noisettes moulues, des inclusions comestibles croquantes, des particules de fruit, et du fourrage solide ou liquide.
